(19) Europäisches Patentamt / European Patent Office / Office européen des brevets

(11) **EP 4 456 641 B1**

(12) **EUROPEAN PATENT SPECIFICATION**

(45) Date of publication and mention
of the grant of the patent:
**01.07.2026 Bulletin 2026/27**

(21) Application number: **22910482.3**

(22) Date of filing: **15.09.2022**

(51) International Patent Classification (IPC):
*H04W 72/0446* (2023.01)   *H04W 72/0453* (2023.01)
*H04B 1/7143* (2011.01)    *H04L 25/02* (2006.01)
*H04L 1/08* (2006.01)     *H04L 5/00* (2006.01)

(52) Cooperative Patent Classification (CPC):
**H04W 72/0446; H04B 1/7143; H04L 1/08;
H04L 5/0012; H04L 5/0051; H04W 72/0453;**
H04L 5/0048; H04L 5/0053; H04L 5/0057;
H04L 25/0204; H04L 25/0222; Y02D 30/70

(86) International application number:
**PCT/JP2022/034592**

(87) International publication number:
**WO 2023/119756 (29.06.2023 Gazette 2023/26)**

(54) **COMMUNICATION DEVICE AND COMMUNICATION METHOD**

KOMMUNIKATIONSVORRICHTUNG UND KOMMUNIKATIONSVERFAHREN

DISPOSITIF DE COMMUNICATION ET PROCÉDÉ DE COMMUNICATION

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **21.12.2021 JP 2021207149**

(43) Date of publication of application:
**30.10.2024 Bulletin 2024/44**

(73) Proprietor: **Panasonic Intellectual Property
Corporation
of America
Torrance, CA 90504 (US)**

(72) Inventors:
• YAMAMOTO, Tetsuya
  Kadoma-shi, Osaka 571-0057 (JP)
• SUZUKI, Hidetoshi
  Kadoma-shi, Osaka 571-0057 (JP)

(74) Representative: **Grünecker Patent- und
Rechtsanwälte
PartG mbB
Leopoldstraße 4
80802 München (DE)**

(56) References cited:
EP-A1- 4 207 919     EP-A1- 4 319 367
WO-A1-2020/059537    WO-A1-2020/166022
WO-A1-2021/038658

• MODERATOR (CHINA TELECOM): "FL
  Summary#2 of joint channel estimation for
  PUSCH", vol. RAN WG1, no. e-Meeting; 20211111
  - 20211119, 17 November 2021 (2021-11-17),
  XP052082089, Retrieved from the Internet
  <URL:https://ftp.3gpp.org/tsg_ran/WG1_RL1/
  TSGR1_107-e/Docs/R1-2112561.zip R1-2112561 -
  FL Summary#2 of joint channel estimation for
  PUSCH.docx> [retrieved on 20211117]
• QUALCOMM INCORPORATED: "PUCCH
  enhancements", 3GPP DRAFT; R1-2107362, 3RD
  GENERATION PARTNERSHIP PROJECT (3GPP),
  MOBILE COMPETENCE CENTRE ; 650, ROUTE
  DES LUCIOLES ; F-06921 SOPHIA-ANTIPOLIS
  CEDEX ; FRANCE, vol. RAN WG1, no. e-Meeting;
  20210816 - 20210827, 6 August 2021
  (2021-08-06), Mobile Competence Centre ; 650,
  route des Lucioles ; F-06921 Sophia-Antipolis
  Cedex ; France
  , XP052038307

# EP 4 456 641 B1

## Description

### Technical Field

The present disclosure relates to a communication apparatus and a communication method.

### Background Art

In recent years, a dramatic growth of Internet of Things (IoT) has been expected with the expansion and diversification of radio services as a background. The usage of mobile communication is extending to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features of enhanced mobile broadband (eMBB), massive machine type communication (mMTC), and ultra reliable and low latency communication (URLLC), and can flexibly provide radio communication in response to a wide variety of needs, by using these features.

The 3rd Generation Partnership Project (3GPP) as an international standardizing body has been specifying New Radio (NR) as one of 5G radio interfaces.

3GPP document for discussion by MODERATOR (CHINA TELECOM) titled "FL Summary#2 of joint channel estimation for PUSCH", 3GPP DRAFT; R1-2112561, is a summary of numerous email discussions and in its section 2.4 "Inter-slot frequency hopping with inter-slot bundling" discloses different options for the sequential order of the processes "hopping intervals determination", "configured TDW determination" and "actual TDW determination".

EP 4 319 367 A1 (NTT DOCOMO INC [JP]) with a publication date of 7 February 2024 (2024-02-07) is an older right according to Art. 54(3) EPC and discloses a terminal that repeatedly transmits an uplink channel and controls transmission of the uplink channel in a specified period of more than one slot. The terminal causes hopping the uplink channel in the frequency directionin units of the specified period.

EP 4 207 919 A1 (HUAWEI TECH CO LTD [CN]) with a publication date of 5 July 2023 (2023-07-05) is an older right according to Art. 54(3) EPC and discloses a method in which a network device receives a random access request from a terminal device; and the network device sends a random access response to the terminal device, where the random access response includes scheduling information of a message 3, the scheduling information includes first information, and the first information indicates the terminal device to repeatedly transmit the message 3 by using same transmit power and a same precoding matrix. When repeatedly transmitting the message 3, the terminal device uses the same transmit power and the same precoding matrix.

### Citation List

#### Non-Patent Literature

NPL 1
3GPP TS38.104 V15.15.0, "NR Base Station (BS) radio transmission and reception (Release 15)," September 2021.
NPL 2
3GPP TSG RAN Meeting #90e, RP-202928, "New WID on NR coverage enhancements," China Telecom, December 2020.
NPL 3
3GPP TS38.211 V16.7.0, "NR Physical channels and modulation (Release 16)," September 2021.
NPL 4
3GPP TS38.212 V16.7.0, "NR Multiplexing and channel coding (Release 16)," September 2021.
NPL 5
3GPP TS38.213 V16.7.0, "NR Physical layer procedures for control (Release 16)," September 2021.
NPL 6
3GPP TS38.214 V16.7.0, "NR Physical layer procedures for data (Release 16)," September 2021.
NPL 7
3GPP TS38.331 V16.6.0, "NR Radio Resource Control (RRC) protocol specification (Release 16)," September 2021.
NPL 8
3GPP TSG RAN WG1 #107-e, R1-2112828, " [107-e-NR-R17-CovEnh-03] Summary of email discussion on joint channel estimation for PUSCH," Moderator (China Telecom), November 2021.

Summary of Invention

Technical Problem

However, there is scope for further study on a method of improving the communication efficiency in uplink. The invention is definded by the appended claims. Furthermore, the invention is based on Aspect 3. Examples and aspects not necessarily falling under the scope of the claims are provided in the application to better understand the invention.

One non-limiting and exemplary aspect of the present disclosure facilitates providing a communication apparatus and a communication method each capable of improving the communication efficiency in uplink.

A communication apparatus according to an exemplary aspect of the present disclosure includes: control circuitry, which, in operation, performs, based on a transmission period configured for repetition transmission of a signal, control of frequency hopping in which transmission is performed at the same frequency position in a plurality of periods; and transmission circuitry, which, in operation, transmits the signal in accordance with the control of the frequency hopping.

It should be noted that general or specific aspects may be implemented as a system, a method, an integrated circuit, a computer program, a storage medium, or any selective combination thereof.

According to an exemplary aspect of the present disclosure, it is possible to improve the communication efficiency in uplink.

Additional benefits and advantages of the disclosed aspects will become apparent from the specification and drawings. The benefits and/or advantages may be individually obtained by the various aspects and features of the specification and drawings, which need not all be provided in order to obtain one or more of such benefits and/or advantages.

Brief Description of Drawings

FIG. 1 illustrates a configuration example of a configured Time Domain Window (TDW);
FIG. 2 illustrates another configuration example of the configured TDW;
FIG. 3 illustrates an example of inter-slot frequency hopping;
FIG. 4 illustrates another example of the inter-slot frequency hopping;
FIG. 5 illustrates an example of repetition transmission;
FIG. 6 illustrates another example of the repetition transmission;
FIG. 7 is a block diagram illustrating an exemplary configuration focused on part of a base station;
FIG. 8 is a block diagram illustrating an exemplary configuration focused on part of a terminal;
FIG. 9 is a block diagram illustrating an exemplary configuration of the base station;
FIG. 10 is a block diagram illustrating an exemplary configuration of the terminal;
FIG. 11 is a flowchart describing an operation example related to configuration of the frequency hopping;
FIG. 12 illustrates still another example of the repetition transmission;
FIG. 13 illustrates still another example of the repetition transmission;
FIG. 14 is a flowchart describing another operation example related to the configuration of the frequency hopping;
FIG. 15 illustrates an exemplary slot format;
FIG. 16 illustrates still another example of the repetition transmission;
FIG. 17 illustrates yet another example of the repetition transmission;
FIG. 18 illustrates an exemplary architecture for a 3GPP NR system;
FIG. 19 schematically illustrates a functional split between Next Generation-Radio Access Network (NG-RAN) and 5th Generation Core (5GC);
FIG. 20 is a sequence diagram of a Radio Resource Control (RRC) connection setup/reconfiguration procedure;
FIG. 21 schematically illustrates usage scenarios of enhanced Mobile BroadBand (eMBB), massive Machine Type Communications (mMTC), and Ultra Reliable and Low Latency Communications (URLLC); and
FIG. 22 is a block diagram illustrating an exemplary 5G system architecture for a non-roaming scenario.

Description of Aspects

Hereinafter, aspects of the present disclosure will be described in detail with reference to the accompanying drawings.

In NR, for example, in addition to a frequency band of 6 GHz or less, mainly within 700 MHz to 3.5 GHz band (e.g., may be referred to as Frequency Range 1 (FR1)), which is used for cellular communication, a millimeter-wave band such as 28 GHz or 39 GHz band capable of ensuring a wide band (e.g., may be referred to as FR2) can be utilized (e.g., see Non-Patent Literature (hereinafter referred to as "NPL") 1). Further, for example, in FR1, a high frequency band is possibly used compared with the frequency band used in Long Term Evolution (LTE) or 3rd Generation mobile communication systems (3G) such as 3.5 GHz band. The higher the frequency band is, the greater a radio wave propagation loss is likely to be, and thus, the received quality of radio waves is susceptible to deterioration. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in Release 17 (e.g., referred to as "Rel. 17"), a method of improving the coverage in NR has been studied (e.g., see NPL 2).

[Exemplary Technology of NR]

In NR, for example, a terminal (also referred to as, e.g., User Equipment (UE)) transmits and receives data in accordance with resource allocation indicated by at least one of a downlink control signal (e.g., Downlink Control Information (DCI)) in a physical layer (layer 1) transmitted via a downlink control channel (e.g., Physical Downlink Control Channel (PDCCH)) from a base station (also referred to as, e.g., gNB) and Radio Resource Control (RRC) corresponding to layer 3 (e.g., see NPLs 3 to 7).

In uplink (UL), for example, the terminal transmits an uplink data channel (e.g., Physical Uplink Shared Channel (PUSCH)) in accordance with the resource allocation (e.g., Grant or UL grant) from the base station. Information on the resource allocation included in at least one of the DCI and RRC may include, for example, information on a time-domain resource with which PUSCH is transmitted. For example, the information on the time-domain resource may include information (e.g., K2) on the timing from the slot in which the terminal has received PDCCH to the slot in which the terminal transmits PUSCH, information on the first (head) symbol position of PUSCH in a slot or the number of symbols for transmitting PUSCH.

For example, the terminal may use an uplink control channel (e.g., Physical Uplink Control Channel (PUCCH)) to feedback, to the base station, a response signal (also called Acknowledgement/Negative Acknowledgement (ACK/-NACK) or Hybrid Automatic Repeat Request (HARQ)-ACK) indicating success or failure of decoding on a downlink data channel (e.g., Physical Downlink Shared Channel (PDSCH)) (e.g., see NPL 5).

Moreover, the terminal may, for example, use PUCCH to transmit, in addition to ACK/NACK, a radio resource allocation request (e.g., Scheduling Request (SR)) in uplink and downlink channel state information (e.g., Channel State Information (CSI)) to the base station. The information, such as ACK/NACK, CSI, and SR, transmitted using PUCCH is also referred to as, for example, uplink control information (e.g., Uplink Control Information (UCI)).

Further, for example, when transmitting ACK/NACK for PDSCH assigned by a DCI, the terminal may transmit PUCCH in accordance with resource allocation indicated by the DCI from the base station. The control information included in the DCI may include, for example, information on a PUCCH resource. For example, the information on the PUCCH resource may include information on the timing of how many slots later PUCCH is transmitted since the slot in which the terminal has received PDSCH. The information on the timing may be referred as K1 or PDSCH-to-HARQ_feedback timing indication.

[Repetition]

In NR uplink transmission, a method of transmitting PUSCH or PUCCH using a plurality of slots (also referred to as Repetition or repetition transmission) is supported. When the Repetition is applied, the information on the time-domain resource for transmitting PUSCH or the information on the PUCCH resource may include information on the number of Repetitions.

For example, in NR Release 15 or NR Release 16 (e.g., denoted as "Rel. 15/16"), two PUSCH repetition methods are specified for Repetition of PUSCH (see, e.g., NPL 6).

The first PUSCH repetition is slot-by-slot Repetition in which the same time resource allocation is applied over a plurality of consecutive (continuous) slots. In the following, this PUSCH repetition method is called "PUSCH repetition Type A with continuous slot counting."

The second PUSCH Repetition method is Repetition in which one or a plurality of PUSCHs is repeatedly transmitted in one slot. In the following, this PUSCH repetition method is called "PUSCH repetition Type B." In the PUSCH repetition Type B, a base station may indicate, to a terminal, a time-domain resource and the number of repetitions for the first (initial) PUSCH transmission, for example. In time-domain resource allocation for the second and subsequent PUSCH transmissions, a time-domain resource corresponding to symbols, which are consecutive to and in number identical to the preceding PUSCH transmission, may be allocated, for example.

In the PUSCH repetition Type A with continuous slot counting, the number of repetition slots may be a value counted based on consecutive slots, for example. In NR Release 17 (denoted, e.g., "Rel. 17"), a method of setting the number of repetition slots to a value counted based on an uplink slot that is available (can be used) for PUSCH transmission (available slot) has been studied as function enhancement of the PUSCH repetition Type A (e.g., see NPL 2). In the following, this PUSCH repetition method is called "PUSCH repetition Type A with available slot counting." Further, for example, each of the PUSCH repetition Type A with continuous slot counting and the PUSCH repetition Type A with available slot counting may be simply referred to as PUSCH repetition Type A.

Meanwhile, for Repetition of PUCCH, a method of setting the number of repetition slots to a value counted based on an uplink slot (or subslot) that is available for PUCCH transmission is specified (see, e.g., NPL 5), for example.

In addition, in NR, for example, a reference signal (e.g., Demodulation Reference Signal (DMRS)) used in channel estimation for demodulation is mapped in a resource for PUSCH or PUCCH. DMRS may be mapped at front of a slot, for example. Alternatively, DMRSs may be mapped in a plurality of symbols in a slot, for example (see, e.g., NPL 3 or 6). In Rel. 15/16, for example, when the PUSCH repetition or PUCCH repetition is applied, DMRS configuration in each slot (or subslot) or in each Repetition may be the same. For example, the DMRS configuration may include information such as the number of DMRS symbols, DMRS position, or DMRS type in each slot (or subslot) or in each PUSCH transmission (PUSCH occasion).

[Joint Channel Estimation]

For example, in a communication environment such that coverage enhancement can be performed, e.g., a communication environment with a lower Signal-to-Noise power Ratio (SNR) or Signal-to-Interference plus Noise power Ratio (SINR), channel estimation accuracy is likely to deteriorate.

In order to improve the coverage, for example, the introduction of Repetition is expected. In NR Rel. 15/16, there is a constraint (or limitation) that a result of the channel estimation demodulated (or estimated) by DMRS is available in the slot including the DMRS (i.e., unavailable in a slot different from the slot including the DMRS).

Meanwhile, in NR Rel. 17, as a technology for improving the channel estimation accuracy, a method of combining DMRSs in multiple slots/Repetitions has been studied, for example (e.g., see NPL 2). The method of combining the DMRSs in the multiple slots/Repetitions is also referred to as, for example, inter-slot channel estimation, joint channel estimation, or DMRS bundling. The introduction of the method of combining the DMRSs in the multiple slots/Repetitions makes it possible to, for example, eliminate the aforementioned limitation on use of the channel estimation result demodulated by DMRS, thereby improving the received SNR of DMRS used in the channel estimation.

The joint channel estimation assumes, for example, in-phase combination for received signals over a plurality of slots and is based on consistency of transmission power of transmission signals in a certain period and occurrence of no phase discontinuity in Repetition transmission. In NR Rel. 17, for example, as a time period (e.g., Time Domain Window (TDW)) to be configured to support the joint channel estimation (DMRS bundling), introduction of a configured TDW (or nominal TDW) and an actual TDW has been discussed (e.g., see NPL 8). In the following, the configured TDW is also referred to as a "cTDW," and the actual TDW is also referred to as an "aTDW."

For example, when the DMRS bundling is applied to the PUSCH repetition or PUCCH repetition, one or a plurality of consecutive or non-consecutive configured TDWs may be applied to the PUSCH repetition or PUCCH repetition.

The configured TDW may have features (1) through (5) to be described below (see, e.g., NPL 8), for example.

(1) Each configured TDW is composed of one or a plurality of consecutive physical slots.
(2) A length of the configured TDW (hereinafter referred to as "period length (L)") can be explicitly configured by a single value. For example, period length L of the configured TDW may be configured by a higher layer signal. Further, the maximum period length L of the configured TDW that can be supported by a terminal may be reported from the terminal to a base station as a Capability of the terminal, for example. Meanwhile, for example, when period length L of the configured TDW is not explicitly configured by the higher layer signal, the terminal may configure period length L of the configured TDW to a default value. Here, as the default value of period length L of the configured TDW, for example, the minimum value between the maximum value of period length L of the configured TDW supportable by the terminal and a period length for transmission of the PUSCH repetition or PUCCH repetition may be configured.
(3) A start position of the first configured TDW is a slot corresponding to an initial PUSCH transmission of PUSCH repetition or an initial PUCCH transmission of PUCCH repetition.
(4) Start positions of the other (second and subsequent) configured TDWs may be implicitly determined before the initial PUSCH transmission of the PUSCH repetition or the initial PUCCH transmission of the PUCCH repetition.

For example, in the PUSCH repetition Type A with continuous slot counting, configured TDWs are consecutively configured, and a start position of each of the other (second and subsequent) configured TDWs is the physical slot next to the last slot included in the preceding configured TDW.

Meanwhile, for example, in the PUSCH repetition Type A with available slot counting or PUCCH repetition, a configured TDW is determined based on an uplink slot that is available for PUSCH or PUCCH transmission (available slot). For example, a start position of each of the other (second and subsequent) configured TDWs is the available slot next to the last available slot included in the preceding configured TDW.

(5) An ending position of the last configured TDW is a slot corresponding to the last PUSCH transmission of the PUSCH repetition or the last PUCCH transmission of the PUCCH repetition.

The exemplary features of the configured TDW have been each described, thus far.

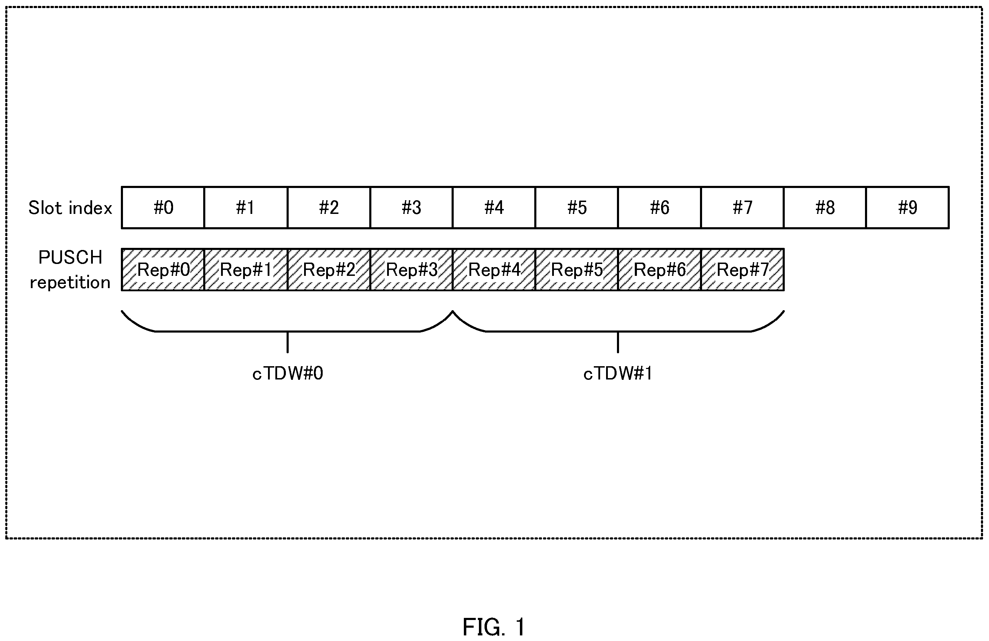

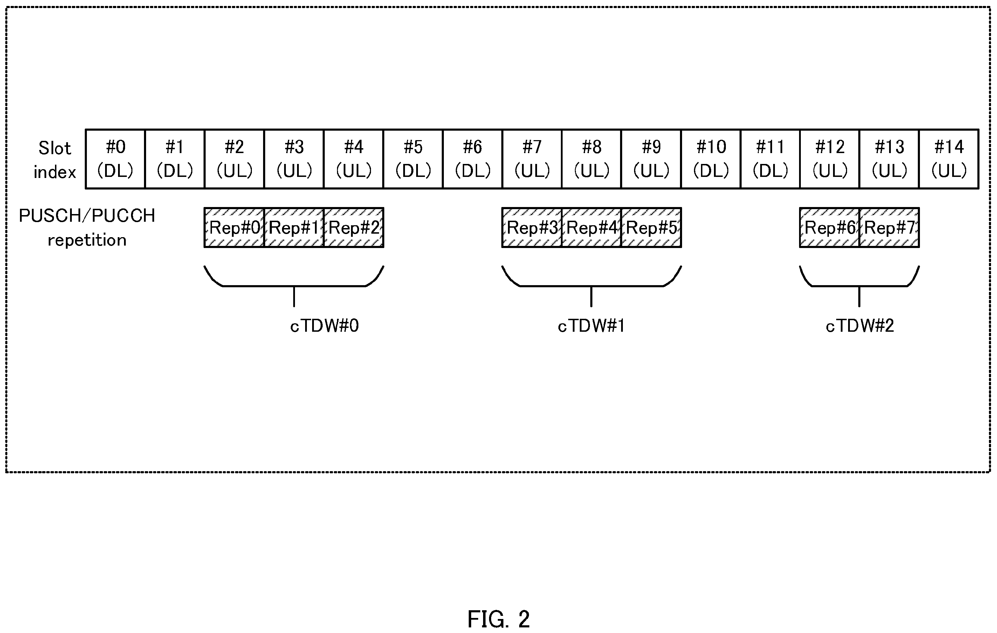

FIGS. 1 and 2 are each illustrate a configuration example of a configured TDW in Repetition transmission. In FIGS. 1 and 2, as an example, the number of times of PUSCH repetition or PUCCH repetition is set to eight, and period length L of the configured TDW is set to four slots. Note that FIG. 1 illustrates a configuration example of a configured TDW in the PUSCH repetition Type A with continuous slot counting, and FIG. 2 illustrates a configuration example of a configured TDW in the PUSCH repetition Type A with available slot counting or PUCCH repetition.

For example, in FIG. 1, configured TDWs (e.g., cTDW #0 and cTDW #1) are configured for four slots with slot numbers (slot indices) #0 to #3 (e.g., also referred to as slots #0 to #3; the same applies hereinafter) and four slots with slot numbers #4 to #7. For example, in FIG. 1, a terminal may perform PUSCH repetition in slots #0 to #7. Further, in FIG. 1, a base station may perform, in the PUSCH repetition, channel estimation using DMRS bundling, in units of cTDWs #0 configured for slots #0 to #3, and perform the channel estimation using the DMRS bundling, in units of cTDWs #1 configured for slots #4 to #7.

Further, for example, in FIG. 2, configured TDWs (e.g., cTDW 0, cTDW #1, and cTDW #2) are configured for consecutive three slots with slot numbers #2 to #4, three slots with slot numbers #7 to #9, and two slots with slot numbers #12 and #13, which are corresponding to uplink slots (ULs). For example, in FIG. 2, a terminal may perform PUSCH repetition in slots #2 to #4, #7 to #9, #12 and #13. Further, in FIG. 2, a base station may perform, in the PUSCH repetition, channel estimation using DMRS bundling, in units of cTDWs #0 configured for slots #2 to #4, perform the channel estimation using the DMRS bundling, in units of cTDWs #1 configured for slots #7 to #9, and perform the channel estimation using the DMRS bundling, in units of cTDWs #2 configured for slots #12 and #13.

Besides, for example, in a period (duration) of one configured TDW, one or a plurality of actual TDWs can be implicitly configured.

The actual TDW may have features to be described below (see, e.g., NPL 8), for example.

(1) A start position of the first actual TDW is a slot corresponding to an initial PUSCH transmission or PUCCH transmission in the period of the configured TDW (hereinafter referred to as "configured TDW period").

(2) After the start of the actual TDW, the terminal is required to have consistency and phase continuity of transmission power of transmission signals until at least one of the following condition (2-1) and condition (2-2) is satisfied. When the following condition(s) is/are satisfied, the actual TDW ends:

Condition (2-1): The actual TDW reaches the last PUSCH transmission or PUCCH transmission in the configured TDW period; and

Condition (2-2): An event that breaks the consistency or phase continuity with respect to the transmission power of transmission signals occurs.

(3) When the consistency or phase continuity with respect to the transmission power of the transmission signals is broken by the event, whether an actual TDW is newly generated (or configured) depends on the Capability of the terminal on restarting the DMRS bundling.

The exemplary features of the actual TDW have been each described, thus far.

Examples of the events that break the consistency and phase continuity with respect to the transmission power of the transmission signals include, for example, dropping or canceling of PUSCH transmission or PUCCH, reception of a downlink slot or a downlink signal, and frequency hopping. Note that events that break the consistency and phase continuity with respect to the transmission power of the transmission signals are not limited to these and may be other events.

From the above, it is assumed, in practice, that the consistency is present and no phase discontinuity occurs with respect to transmission power of transmission signals in a period of an actual TDW. For this reason, the DMRS bundling (or inter-slot channel estimation, joint channel estimation) is applicable to the period of the actual TDW. For example, the actual TDW and the configured TDW match with each other when no event that breaks the consistency and the phase continuity with respect to the transmission power of the transmission signals occurs in the period of the configured TDW.

[Frequency Hopping]

As a technology for improving the coverage, application of frequency hopping is also required. In NR Rel. 15/16, as an inter-slot frequency hopping technology in Repetition transmission, a method is applied of setting two resource block (RB) positions and switching, for each slot, an RB position at which a signal of PUSCH or PUCCH is transmitted (see, e.g., NPL 5 or 6).

For example, in the inter-slot frequency hopping in Repetition transmission of PUSCH, a terminal may determine a frequency position, $RB_{start}(n_s)$, at which PUSCH is transmitted, based on a physical slot number, $n_s$, as in following Equation 1:

$$RB_{start}(n_s) = \begin{cases} RB_{start} & n_s \bmod 2 = 0 \\ (RB_{start} + RB_{offset}) \bmod N_{BWP}^{size} & n_s \bmod 2 = 1 \end{cases} \quad \text{... (Equation 1)}.$$

Herein, $n_s$ indicates the physical slot number in a radio frame, $RB_{start}$ indicates a head RB position calculated by frequency resource allocation information included in at least one of downlink control information (e.g., DCI) and higher layer signaling (e.g., RRC), $RB_{offset}$ indicates an offet amount between two RB positions (e.g., two hops (or frequency hops)) used for transmission in the frequency hopping, and $N_{BWP}^{size}$ indicates the size of bandwidth part (BWP) configured for the terminal.

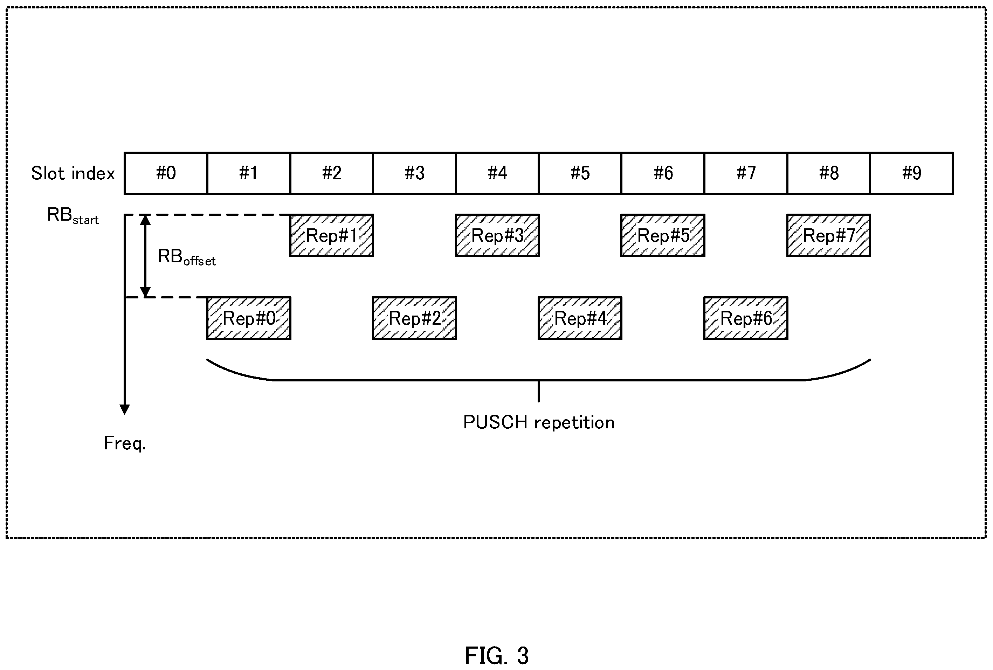

FIG. 3 illustrates an example of inter-slot frequency hopping in PUSCH repetition transmission. In the example illustrated in FIG. 3, PUSCH repetition is configured over eight slots with slot numbers ($n_s$) #1 to #8. For example, according to Equation 1, in slots with odd slot numbers, $n_s$ = #1, #3, #5, and #6 (Repetition #0, #2, #4, and #6), PUSCH is transmitted at the RB position, $RB_{start}$, whereas, in slots with even slot numbers, $n_s$ = #2, #4, #6, and #8 (Repetition #1, #3, #5, and #7), PUSCH is transmitted at the RB position ($RB_{start}$+$RB_{offset}$).

Further, for example, in the inter-slot frequency hopping in Repetition transmission of PUCCH, a terminal may determine a frequency position, RB(n'), at which PUCCH is transmitted, based on the slot number, n', in a transmission period of the PUCCH repetition (e.g., relative slot number to PUCCH transmission period), as in following Equation 2:

$$RB(n') = \begin{cases} RB_0 & n' \bmod 2 = 0 \\ RB_1 & n' \bmod 2 = 1 \end{cases} \quad \text{... (Equation 2)}.$$

Herein, n' indicates a relative slot number that increases in value for consecutive slots, assuming that a slot corresponding to the first PUCCH transmission in the PUCCH repetition is n' = 0. Further, $RB_0$ and $RB_1$ are the first RB position and the second RB position configured by PUCCH resource allocation information (e.g., PUCCH resource set).

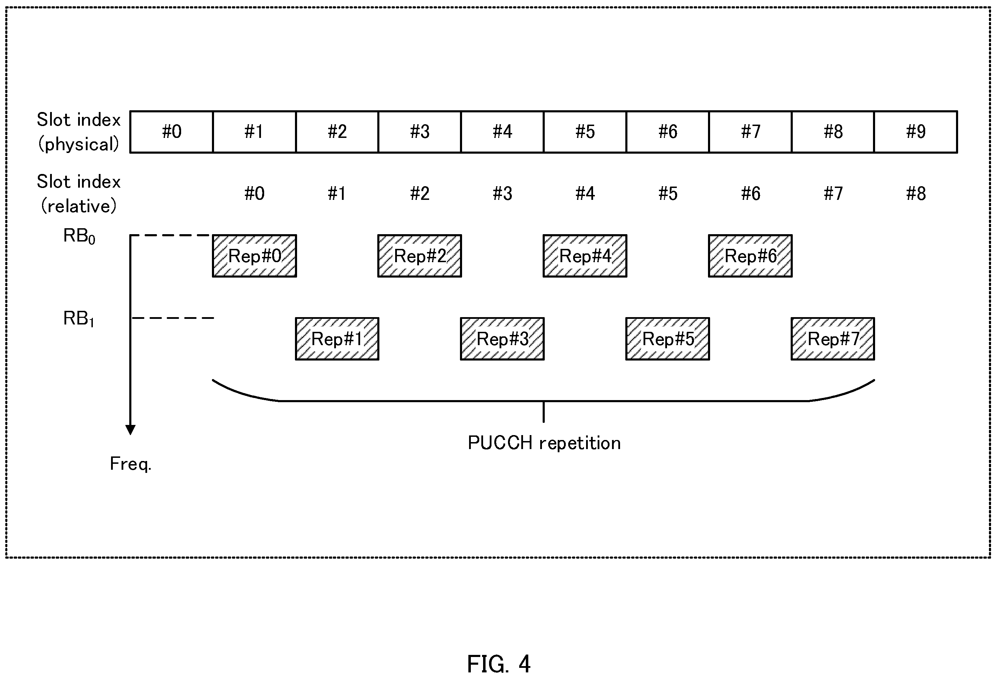

FIG. 4 illustrates an example of inter-slot frequency hopping in PUCCH repetition transmission. In the example illustrated in FIG. 4, PUCCH repetition is configured over eight slots with slot numbers ($n_s$) #1 to #8. In this case, as the relative slot number, n', n' = 0 to 7 are set, assuming that physical slot number # 1 corresponding to the first PUCCH transmission in the PUCH repetition is n' = 0. Further, in the example illustrated in FIG. 4, according to the Equation 2, in slots with even slot numbers, n' = #0, #2, #4, and #6 (Repetition #0, #2, #4, and #6), PUCCH is transmitted at the first RB position, $RB_0$, whereas, in slots with odd slot numbers, n' = #1, #3, #5, and #7 (Repetition #1, #3, #5, and #7), PUCCH is transmitted at the second RB position, $RB_1$.

The frequency hopping has been described, thus far.

In the above-mentioned inter-slot frequency hopping, for example, an RB position is hopped for each slot as illustrated in FIG. 3 or FIG. 4, the event that breaks the consistency or phase continuity with respect to the transmission power of the transmission signals occurs for each slot, thus making it difficult to apply the DMRS bundling. For example, in Repetition transmission, in order to obtain an improvement effect on the channel estimation accuracy by applying the DMRS bundling and to obtain a frequency diversity effect by applying the frequency hopping (e.g., in order to maintain consistency and phase continuity with respect to transmission power of transmission signals), it has been expected to introduce frequency hopping (or frequency hopping pattern) in which transmission is successively performed at the same frequency position (e.g., RB position) in a certain period (e.g., between multiple slots).

For example, there is scope for study on configuration of a frequency hopping pattern in which transmission is performed at the same RB position in a certain period (e.g., between multiple slots).

Hereinafter, a certain period at which transmission is performed at the same RB position is referred to as a "hopping period (hopping duration) or hopping interval."

For example, when both the frequency hopping and the DMRS bundling are applied to a terminal, it has been studied that the terminal sequentially determines a hopping period and a configured TDW. The terminal may be, for example, configured with a parameter for the hopping period and a parameter for a period length of the configured TDW.

For example, when the parameter for the hopping period is indicated (or configured), the terminal may configure the hopping period based on a value (configuration value) of the indicated parameter. On the other hand, when the parameter for the hopping period is not indicated (or not configured), it has been studied that the terminal configures the period length of the configured TDW to the hopping period.

In a situation where the hopping period is configured to be the same as the period length of the configured TDW, e.g., when a frequency hopping pattern is determined based on a physical slot number, as in the PUSCH repetition of NR Rel. 15/16, the hopping period and the Configured TDW period in the DMRS bundling may not be aligned with each other.

For example, in the inter-slot frequency hopping in Repetition transmission of PUSCH, a method may be included in which a terminal determines a frequency position, $RB_{start}(n_s)$, at which PUSCH is transmitted, based on a physical slot number, $n_s$, as in following Equation 3:

$$RB_{start}(n_s) = \begin{cases} RB_{start} & \lfloor n_s/N_{FH} \rfloor \ mod \ 2 = 0 \\ (RB_{start} + RB_{offset}) \ mod \ N_{BWP}^{size} & \lfloor n_s/N_{FH} \rfloor \ mod \ 2 = 1 \end{cases} \quad \text{... (Equation 3)}.$$

Herein, $n_s$ indicates a physical slot number in a radio frame, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for the terminal. Moreover, $N_{FH}$ indicates a hopping period length in the frequency hopping.

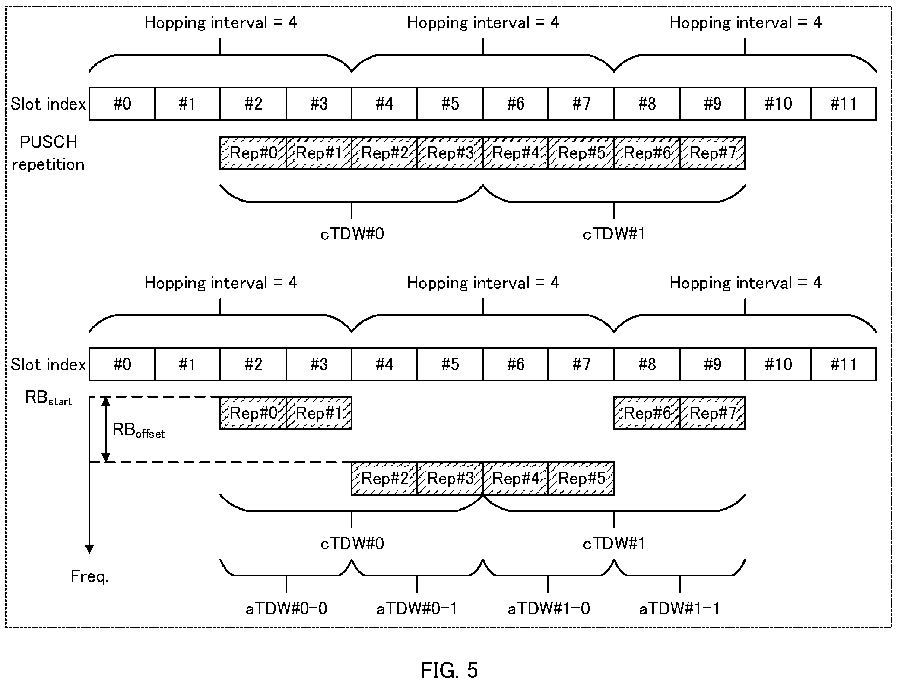

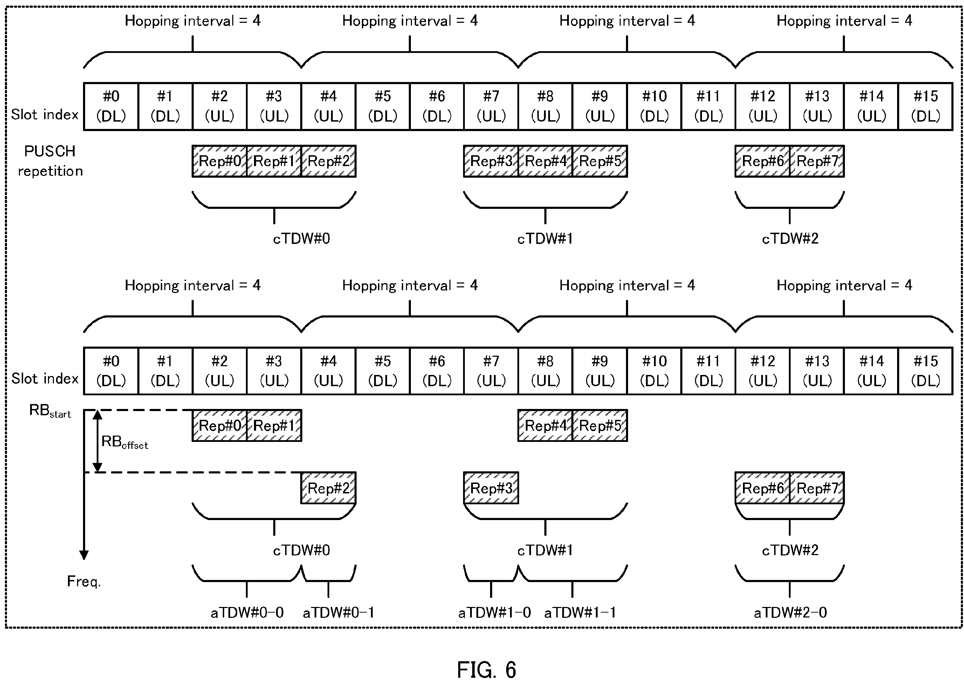

FIGS. 5 and 6 each illustrate an example of PUSCH repetition to which the frequency hopping and the DMRS bundling are applied. In FIGS. 5 and 6, as an example, the number of times of PUSCH repetition is set to eight, and a hopping period length and period length L of a configured TDW are each set to four slots. Further, FIG. 5 illustrates an example in the PUSCH repetition Type A with continuous slot counting, and FIG. 6 illustrates an example in the PUSCH repetition Type A with available slot counting.

In FIGS. 5 and 6, for example, the hopping period with the period length of four slots may be configured in order from the slot with physical slot number #0. Further, in FIGS. 5 and 6, in the period of PUSCH repetition of eight slots, configured TDWs based on L = 4 may be configured. In FIGS. 5 and 6, the hopping period and the configured TDW period in the DMRS bundling are not aligned with each other.

As illustrated in FIGS. 5 and 6, when the hopping period and the configured TDW period in the DMRS bundling are not aligned with each other, frequency hopping (e.g., switching of RB position) occurs in the period of the configured TDW. Hence, as illustrated in FIGS. 5 and 6, in the period of the configured TDW, a plurality of actual TDWs can be generated. In this case, the DMRS bundling is performed in period units of actual TDWs. Therefore, the DMRS bundling for a small number of slots compared to the number of slots set for the configured TDW is applied, which may reduce the improvement effect on the channel estimation accuracy.

In a non-limiting example of the present disclosure, a description will be given of a method of improving the channel estimation accuracy when the frequency hopping and the DMRS bundling are applied in Repetition transmission.

For example, in a non-limiting example of the present disclosure, in a situation where frequency hopping and DMRS bundling are applied to Repetition transmission and hopping period is configured to a period length of a configured TDW, the frequency hopping may be controlled such that the hopping period and the configured TDW period in the DMRS bundling are aligned with each other. For example, a frequency hopping pattern (e.g., pattern of RB position used for transmission) may be determined based on a relative slot number to the configured TDW. This makes it possible to obtain an improvement effect on the channel estimation accuracy by applying the DMRS bundling and to obtain a frequency diversity effect by applying the frequency hopping.

(Aspect 1)

[Overview of Communication System]

A communication system according to each aspect of the present disclosure includes base station 100 and terminal 200.

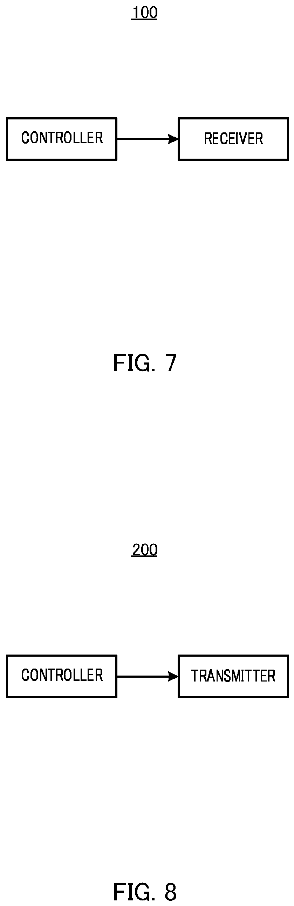

FIG. 7 is a block diagram illustrating an exemplary configuration focused on part of base station 100 (e.g., corresponding to communication apparatus) according to an exemplary aspect of the present disclosure. In base station 100 illustrated in FIG. 7, a controller (e.g., corresponding to control circuitry) performs, based on a time period configured for channel estimation (e.g., DMRS bundling), control of frequency hopping in which transmission is performed at the same frequency position in a plurality of periods. A receiver (e.g., corresponding to reception circuitry) receives the signal in accordance with the control of the frequency hopping.

FIG. 8 is a block diagram illustrating an exemplary configuration focused on part of terminal 200 (e.g., corresponding to communication apparatus) according to an exemplary aspect of the present disclosure. In terminal 200 illustrated in FIG. 8, a controller (e.g., corresponding to control circuitry) performs, based on a time period configured for channel estimation (e.g., DMRS bundling), control of frequency hopping in which transmission is performed at the same frequency position in a plurality of periods. A transmitter (e.g., corresponding to transmission circuitry) transmits the signal in accordance with the control of the frequency hopping.

[Configuration of Base Station]

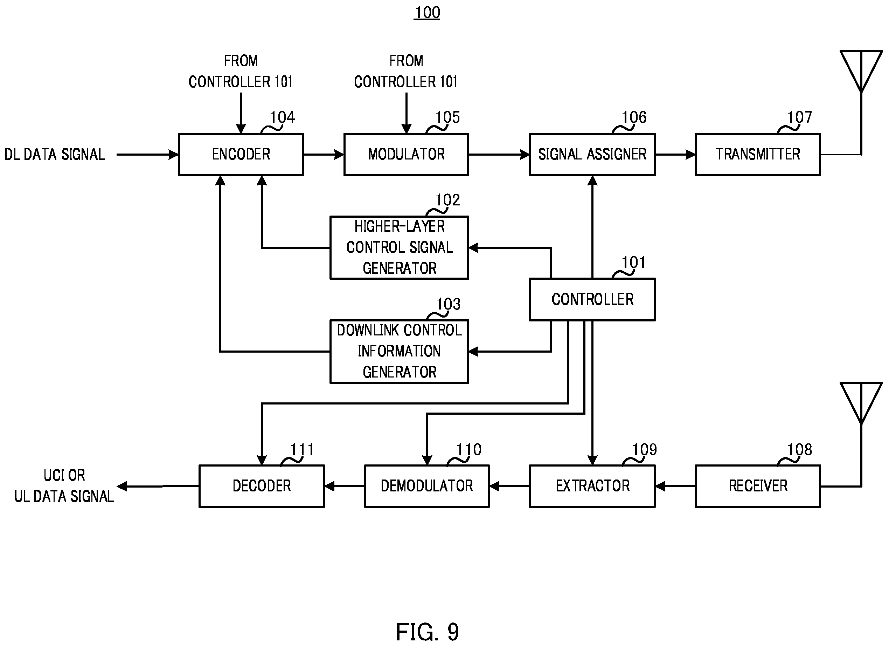

FIG. 9 is a block diagram illustrating an exemplary configuration of base station 100 according to Aspect 1. In FIG. 9, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

For example, at least one of controller 101, higher-layer control signal generator 102, downlink control information generator 103, encoder 104, modulator 105, signal assigner 106, extractor 109, demodulator 110, and decoder 111, which are illustrated in FIG. 9, may be included in the controller illustrated in FIG. 7. Meanwhile, for example, receiver 108 illustrated in FIG. 9 may be included in the receiver illustrated in FIG. 7.

Controller 101, for example, determines information on transmission of an uplink data signal (e.g., PUSCH) to terminal 200 and outputs the determined information to higher-layer control signal generator 102. Further, controller 101 outputs the determined information to extractor 109, demodulator 110, and decoder 111, for example.

The information on the transmission of the uplink data signal may include, for example, information on time-domain resource allocation (e.g., information on Time Domain Resource Allocation (TDRA) table) or information on Repetition transmission (e.g., the number of Repetitions). The information on the transmission of the uplink data signal may also include information on frequency-domain resource allocation (e.g., information on Frequency Domain Resource Allocation (FDRA)), information on frequency hopping (e.g., information on hopping mode, hopping offset, hopping period, or whether to apply hopping). Moreover, the information on the transmission of the uplink data signal may include, for example, information on DMRS bundling (e.g., information on whether to apply DMRS bundling, or period length of configured TDW).

Further, controller 101, for example, determines information on transmission of an uplink control signal (e.g., PUCCH) to terminal 200 and outputs the determined information to at least one of higher-layer control signal generator 102 and downlink control information generator 103. Further, controller 101 outputs the determined information to extractor 109, demodulator 110, and decoder 111, for example.

The information on the transmission of the uplink control signal may include, for example, information on an uplink control channel (e.g., PUCCH) resource or information on Repetition transmission (e.g., the number of Repetitions). The information on the transmission of the uplink control signal may also include, for example, information on frequency hopping (e.g., information on hopping mode, hopping period, or whether to apply hopping). Moreover, the information on the transmission of the uplink control signal may include, for example, information on DMRS bundling (e.g., information on whether to apply DMRS bundling, or period length of configured TDW).

Moreover, controller 101 determines, for example, information (e.g., coding and modulation scheme (MCS) and radio resource allocation) on a downlink signal for transmitting a downlink data signal (e.g., PDSCH), a higher-layer control signal, or downlink control information, and outputs the determined information to encoder 104, modulator 105, and signal assigner 106. Controller 101 also outputs, for example, the information on the downlink signal (e.g., data signal or higher-layer control signal) to downlink control information generator 103.

Higher-layer control signal generator 102, for example, generates a higher-layer control signal bit sequence based on the information input from controller 101 and outputs the higher-layer control signal bit sequence to encoder 104.

Downlink control information generator 103, for example, generates a downlink control information (e.g., DCI) bit sequence based on the information input from controller 101 and outputs the generated DCI bit sequence to encoder 104. Note that the control information may be transmitted to a plurality of terminals.

Encoder 104, for example, encodes downlink data (e.g., DL data signal), the bit sequence input from higher-layer control signal generator 102, or the DCI bit sequence input from downlink control information generator 103, based on the information input from controller 101. Encoder 104 outputs the encoded bit sequence to modulator 105.

Modulator 105, for example, modulates the encoded bit sequence input from encoder 104, based on the information input from controller 101, and outputs the modulated signal (e.g., symbol sequence) to signal assigner 106.

Signal assigner 106 maps, to a radio resource, the symbol sequence (including, e.g., downlink data signal or control signal) input from modulator 105, based on the information indicating the radio resource input from controller 101, for example. Signal assigner 106 outputs, to transmitter 107, a downlink signal to which the signal is mapped.

Transmitter 107, for example, performs transmission-waveform generation processing such as Orthogonal Frequency Division Multiplexing (OFDM) on the signal input from signal assigner 106. In addition, for example, in the case of an OFDM transmission in which a cyclic prefix (CP) is added, transmitter 107 performs Inverse Fast Fourier Transform (IFFT) processing on the signal, and adds the CP to the signal resulting from the IFFT. Moreover, transmitter 107 performs RF processing such as D/A conversion and/or up-conversion on the signal and transmits the resulting radio signal to terminal 200 via an antenna.

Receiver 108, for example, performs RF processing such as down-conversion and/or A/D conversion on an uplink signal from terminal 200 received via an antenna. Further, in the case of the OFDM transmission, receiver 108 performs Fast Fourier Transform (FFT) processing on the received signal and outputs the resulting frequency-domain signal to extractor 109.

Extractor 109, for example, extracts, from the received signal input from receiver 108, based on the information input from controller 101, a radio resource part with which the uplink data signal (e.g., PUSCH) or the uplink control signal (e.g., PUCCH) has been transmitted and then outputs the extracted radio resource part to demodulator 110.

Demodulator 110, for example, demodulates, based on the information input from controller 101, the uplink data signal (e.g., PUSCH) or the uplink control signal (e.g., PUCCH) input from extractor 109. Demodulator 110, for example, outputs a demodulation result to decoder 111.

Decoder 111, for example, performs error correction decoding on the uplink data signal (e.g., PUSCH) or the uplink control signal (e.g., PUCCH), based on the information input from controller 101 and the demodulation result input from demodulator 110, thereby obtaining a reception bit sequence (e.g., UL data signal or UCI) after the decoding.

[Configuration of Terminal]

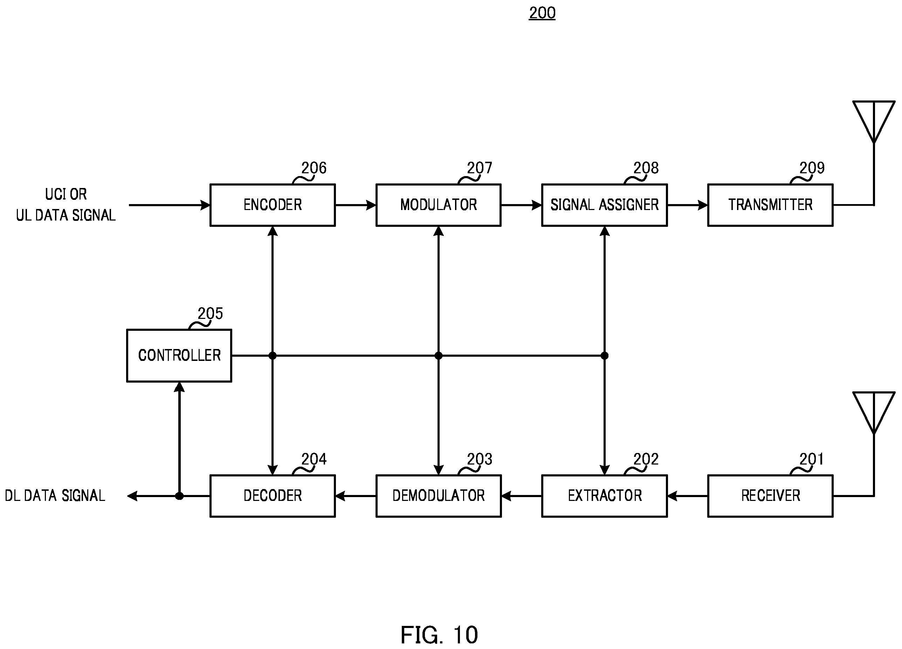

FIG. 10 is a block diagram illustrating an exemplary configuration of terminal 200 according to an exemplary aspect of the present disclosure. For example, in FIG. 10, terminal 200 includes receiver 201, extractor 202, demodulator 203, decoder 204, controller 205, encoder 206, modulator 207, signal assigner 208, and transmitter 209.

For example, at least one of extractor 202, demodulator 203, decoder 204, controller 205, encoder 206, modulator 207, signal assigner 208, which are illustrated in FIG. 10, may be included in the controller illustrated in FIG. 8. Meanwhile, for example, transmitter 209 illustrated in FIG. 10 may be included in the transmitter illustrated in FIG. 8.

Receiver 201, for example, receives a downlink signal (e.g., downlink data signal or downlink control information) from base station 100 via an antenna and performs the RF processing such as the down-conversion and/or the A/D conversion on the received radio signal, thereby obtains a received signal (baseband signal). Further, in the case of receiving an OFDM signal, receiver 201 performs the FFT processing on the received signal to convert the received signal into that in the frequency domain. Receiver 201 outputs the received signal to extractor 202.

Extractor 202, for example, extracts a radio resource part that may include the downlink control information from the received signal input from receiver 201, based on information on the radio resource for the downlink control information input from controller 205, and then outputs the radio resource part to demodulator 203. Further, extractor 202 extracts a radio resource part that includes the downlink data signal, based on information on the radio resource for a data signal input from controller 205, and then outputs the radio resource part to demodulator 203.

Demodulator 203, for example, based on the information input from controller 205, demodulates the signal (e.g., PDCCH or PDSCH) input from extractor 202 and outputs a demodulation result to decoder 204.

Decoder 204, for example, based on the information input from controller 205, performs error correction decoding on PDCCH or PDSCH, using the demodulation result input from demodulator 203, thereby obtaining downlink reception data, a higher-layer control signal, or downlink control information, for example. Decoder 204 outputs the higher-layer control signal and the downlink control information to controller 205, and outputs the downlink reception data. Further, decoder 204 may generate a response signal (e.g., ACK/NACK), based on the decoding result of the downlink reception.

Controller 205, for example, determines a radio resource for at least one of PDSCH reception, PUSCH transmission, and PUCCH transmission, based on the signal input from decoder 204 (e.g., higher-layer control signal and downlink control information). Controller 205 outputs the determined information to extractor 202, demodulator 203, encoder 206, modulator 207, and signal assigner 208, for example.

Encoder 206, for example, performs error correction encoding on an uplink data signal (e.g., PUSCH) and uplink control information (e.g., UCI), based on the information input from controller 205. Encoder 206 outputs the encoded bit sequence to modulator 207.

Modulator 207, for example, based on the information input from controller 205, modulates the encoded bit sequence input from encoder 206 and outputs the modulated signal (symbol sequence) to signal assigner 208.

Signal assigner 208, for example, based on the information input from controller 205, maps the signal input from modulator 207 to a radio resource. Signal assigner 208 outputs, to transmitter 209, the uplink signal to which the signal is mapped.

Transmitter 209, for example, performs transmission signal-waveform generation such as OFDM on the signal input from signal assigner 208. In addition, in the case of the OFDM transmission using the CP, for example, transmitter 209 performs the IFFT processing on the signal and adds the CP to the signal after the IFFT. Alternatively, when transmitter 209 generates a single-carrier waveform, a Discrete Fourier Transformer (DFT) may be additionally provided at a rear stage of modulator 207 or a front stage of signal assigner 208 (neither is illustrated) , for example. Moreover, transmitter 209, for example, performs the RF processing such as the D/A conversion and/or the up-conversion on a transmission signal and transmits the resulting radio signal to base station 100 via an antenna.

[Exemplary Operations of Base Station 100 and Terminal 200]

Exemplary operations of base station 100 and terminal 200 having the above configurations will be described.

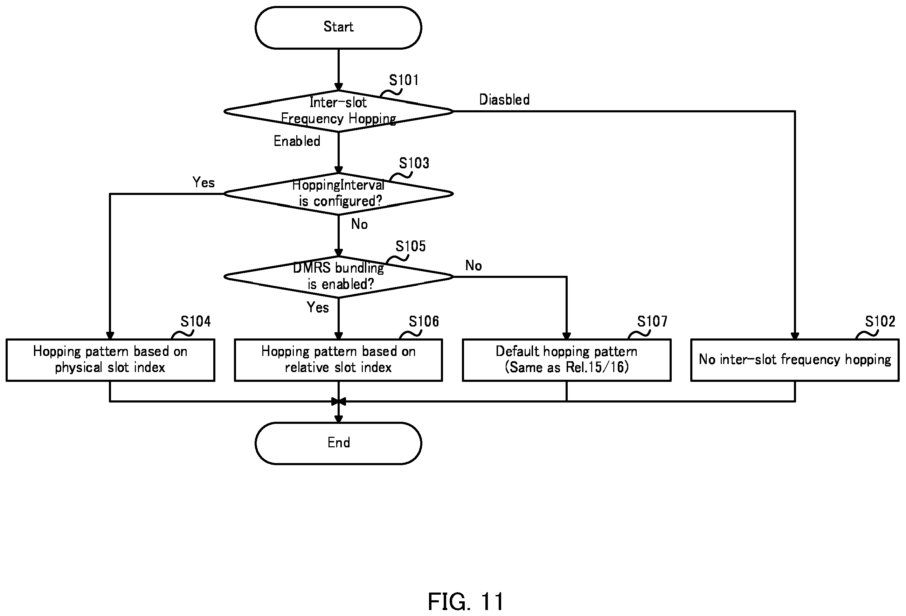

FIG. 11 is a flowchart describing an operation example related to configuration of frequency hopping in base station 100 and terminal 200.

In FIG. 11, base station 100 and terminal 200 determine whether inter-slot frequency hopping is applied (enabled or disabled) to terminal 200 (S101).

When the inter-slot frequency hopping is not applied to terminal 200 (S101: Disabled), terminal 200 performs no inter-slot frequency hopping, for example (S102). Meanwhile, base station 100 assumes that no inter-slot frequency hopping is performed in terminal 200, for example.

On the other hand, the inter-slot frequency hopping is applied to terminal 200 (S101: Enabled), base station 100 and terminal 200 determine whether hopping period is configured for (e.g., explicitly indicated to) terminal 200 (S103).

When the hopping period is configured for terminal 200 (S103: Yes), base station 100 and terminal 200, may configure a frequency hopping pattern based on a physical slot number (e.g., $n_s$), for example (S104).

When the hopping period is not configured for terminal 200 (S103: No), base station 100 and terminal 200 determine whether DMRS bundling is applied to terminal 200 (S105).

When the DMRS bundling is applied to terminal 200 (S105: Yes), base station 100 and terminal 200 may configure a frequency hopping pattern based on a relative slot number (e.g., n') to a transmission period of repetition transmission (or period of Configured TDW in DMRS bundling), for example (S106).

On the other hand, when the DMRS bundling is not applied to terminal 200 (S105: No), base station 100 and terminal 200 may, for example, configure a default hopping pattern (S107). Here, the default hopping pattern may be, for example, a hopping pattern similar to that in NR Rel. 15/16 (e.g., Equation 1 or Equation 2).

The operation example related to the configuration of the frequency hopping in base station 100 and terminal 200 has been described, thus far.

As above, in the present aspect, for example, when the inter-slot frequency hopping and the DMRS bundling are applied to terminal 200 but no hopping period is explicitly indicated to terminal 200, base station 100 and terminal 200 determine a frequency hopping pattern based on a slot number that is relative to a transmission period configured for repetition transmission (or period of Configured TDW in DMRS bundling).

Hereinafter, a configuration example of a frequency hopping pattern in each of PUSCH and PUCCH will be described.

[For PUSCH]

For example, terminal 200 may be configured with (or notified of) the following information on the frequency hopping.

Terminal 200 may be configured with a higher layer parameter (e.g., "frequencyHopping") for a frequency hopping mode, for example. Herein, the "frequencyHopping" is a parameter that configures any of a plurality of frequency hopping modes such as intra-slot frequency hopping or inter-slot frequency hopping.

Further, terminal 200 may determine whether to apply the frequency hopping (e.g., enabled or disabled), based on a value of a frequency hopping field included in a DCI, for example. By way of example, when the value of the frequency hopping field is set to "1," the frequency hopping with the mode configured by the "frequencyHopping" is applied (enabled), and when the value of the frequency hopping field is different from "1" (e.g., when "0"), the frequency hopping need not be applied (disabled).

Meanwhile, when the DCI includes no frequency hopping field or data is transmitted in accordance with resource allocation indicated by RRC (e.g., in case of Configured grant Type 1), for example, terminal 200 may determine whether to apply the frequency hopping depending on whether a parameter for a frequency hopping offset, "frequencyHoppingOffset," is configured. For example, when the frequency hopping offset, "frequencyHoppingOffset," is configured, the frequency hopping with the mode configured by the "frequencyHopping" is applied (enabled), and when no frequency hopping offset, "frequencyHoppingOffset," is configured, the frequency hopping need not be applied (disabled).

Further, terminal 200 may be configured with a parameter (e.g., "PUSCH-HoppingInterval") for a hopping period length (hopping interval), for example.

For example, terminal 200 may be configured with (or notified of) the following information on the DMRS bundling.

Terminal 200 can be, for example, configured with a higher layer parameter for the DMRS bundling (e.g.,

"PUSCH-DMRS-bundling"). Herein, the "PUSCH-DMRS-bundling" is, for example, a parameter that configures whether to apply the DMRS bundling to PUSCH transmission (e.g., enabled or disabled).

Further, when the DMRS bundling is configured, for example, terminal 200 may determine a configured TDW for application of the DMRS bundling. For example, terminal 200 may be configured with a parameter (e.g., "PUSCH-TimeDomainWindowLength") for a period length of the configured TDW (e.g., slot length during which channel estimation is performed by DMRS bundling).

Terminal 200 may report, to base station 100, period length L of the configured TDW that can be supported by this terminal 200 (e.g., maximum value), as a Capability of terminal 200.

Meanwhile, for example, when period length L of the configured TDW is not explicitly configured, terminal 200 may configure period length L of the configured TDW to a default value. As the default value, for example, the minimum value between the maximum value of period length L of the configured TDW supportable by terminal 200 and a period length for transmission of PUSCH repetition may be configured.

The parameters for the frequency hopping and the DMRS bundling that can be configured for terminal 200 have been each described, thus far.

In PUSCH repetition transmission to which the frequency hopping is applied (enabled), when the inter-slot frequency hopping frequency is configured by the frequencyHopping and a hopping period length is explicitly configured by the PUSCH-HoppingInterval (e.g., S103 in FIG. 11: Yes), terminal 200 configures a hopping period length based on a value explicitly configured by the PUSCH-HoppingInterval (S104 in FIG. 11), for example. Additionally, terminal 200 may control the frequency hopping (e.g., frequency hopping pattern) based on a physical slot number, $n_s$, for example. By way of example, a frequency position (e.g., starting RB), $RB_{start}(n_s)$, at which PUSCH is transmitted in slot #$n_s$ may be determined as in following Equation 4:

$$RRB_{start}(n_s) = \begin{cases} RB_{start} & \lfloor n_s/N_{FH} \rfloor \ mod \ 2 = 0 \\ (RB_{start} + RB_{offset}) \ mod \ N_{BWP}^{size} & \lfloor n_s/N_{FH} \rfloor \ mod \ 2 = 1 \end{cases} \quad \text{... (Equation 4)}.$$

Herein, $n_s$ indicates a physical slot number in a radio frame, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for terminal 200. Moreover, $N_{FH}$ indicates a hopping period length in the frequency hopping.

In PUSCH repetition transmission to which the frequency hopping is applied (enabled), when the inter-slot frequency hopping frequency is configured by the frequencyHopping, a hopping period length is not explicitly configured by the PUSCH-HoppingInterval, and the DMRS-bundling is applied (enabled) by the PUSCH-DMRS-bundling (e.g., S105 in FIG. 11: Yes), terminal 200 configures a hopping period length to the same value as period length L of a configured TDW, for example. Additionally, terminal 200 may control the frequency hopping (e.g., frequency hopping pattern) based on a relative slot number, n', to a transmission period of the PUSCH repetition. By way of example, a frequency position, RB(n'), at which PUSCH is transmitted in slot #n' may be determined as in following Equation 5:

$$RB(n') = \begin{cases} RB_{start} & \lfloor n'/N_{FH} \rfloor \ mod \ 2 = 0 \\ (RB_{start} + RB_{offset}) \ mod \ N_{BWP}^{size} & \lfloor n'/N_{FH} \rfloor \ mod \ 2 = 1 \end{cases} \quad \text{... (Equation 5)}.$$

Herein, n' indicates a relative slot number that increases in value for subsequent consecutive slots, assuming that a slot corresponding to the first PUSCH transmission in the transmission period of the PUSCH repetition is n' = 0. Moreover, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for terminal 200. Furthermore, $N_{FH}$ indicates a hopping period length in the frequency hopping, where $N_{FH} = L$.

Further, in PUSCH repetition transmission to which the frequency hopping is applied (enabled), when the inter-slot frequency hopping frequency is configured by the frequencyHopping, a hopping period length is not explicitly configured by the PUSCH-HoppingInterval, and the DMRS-bundling is not applied (enabled) by the PUSCH-DMRS-bundling (e.g., S105 in FIG. 11: No), terminal 200 determines a hopping period length to one, for example. Additionally, terminal 200 may control the frequency hopping (e.g., frequency hopping pattern) based on a physical slot number, $n_s$, for example. By way of example, a frequency position, $RB_{start}(n_s)$, at which PUSCH is transmitted in slot #$n_s$ may be determined as in following Equation 6:

$$RB_{start}(n_s) = \begin{cases} RB_{start} & n_s \bmod 2 = 0 \\ (RB_{start} + RB_{offset}) \bmod N_{BWP}^{size} & n_s \bmod 2 = 1 \end{cases} \quad \text{... (Equation 6)}.$$

Herein, $n_s$ indicates a physical slot number in a radio frame, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for terminal 200. Thus, for example, terminal 200 may configure a frequency hopping pattern in which an RB position is switched for each slot, as in NR Rel. 15/16.

Incidentally, base station 100 may perform reception processing of PUSCH and DMRS, assuming the above-described operation of terminal 200 (transmission of PUSCH), for example.

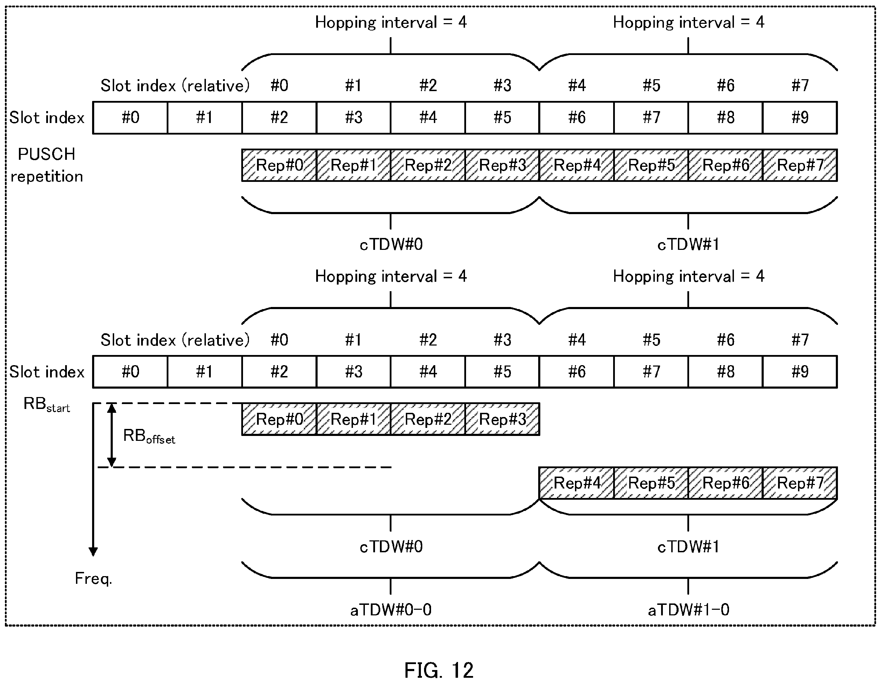

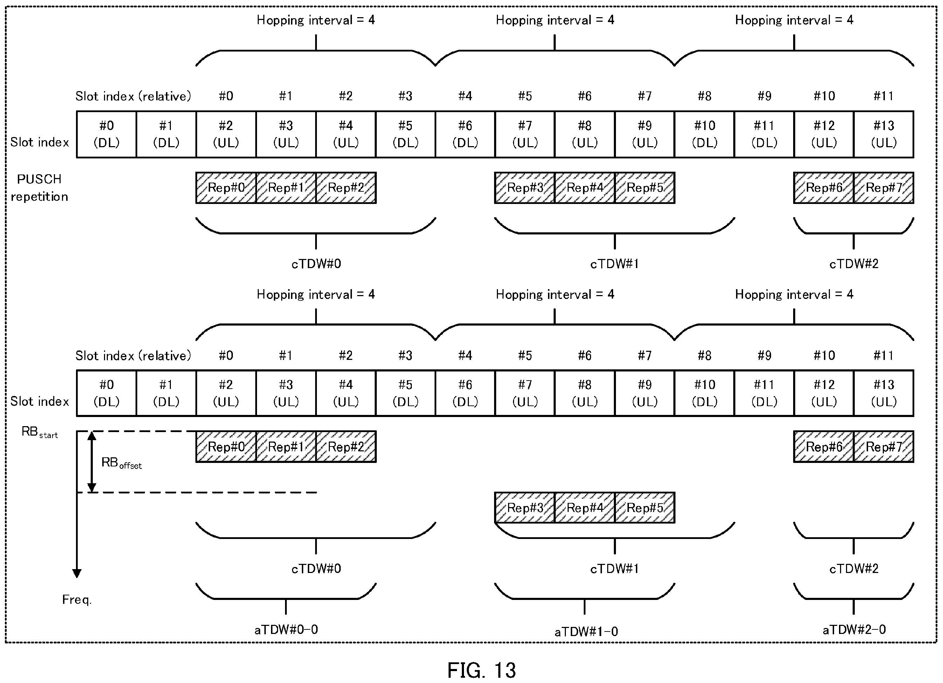

FIGS. 12 and 13 are each illustrate an example of PUSCH repetition to which the frequency hopping and the DMRS bundling are applied when, in PUSCH repetition transmission to which the frequency hopping is applied (enabled), the inter-slot frequency hopping frequency is configured by the frequencyHopping, a hopping period length is not explicitly configured by the PUSCH-HoppingInterval, and the DMRS-bundling is applied (enabled) by the PUSCH-DMRS-bundling (e.g., S105 in FIG. 11: Yes).

FIGS. 12 and 13, as an example, the number of times of PUSCH repetition is set to eight (e.g., Repetitions #0 to #7) and a hopping period length and period length L of a configured TDW are each set to four slots. Further, FIG. 12 illustrates an example in the PUSCH repetition Type A with continuous slot counting, and FIG. 13 illustrates an example in the PUSCH repetition Type A with available slot counting.

For example, as illustrated in FIG. 12, in the PUSCH repetition Type A with continuous slot counting, a hopping period of the frequency hopping is configured from a head slot (e.g., physical slot number #2) of slots for which a configured TDW in the DMRS bundling is configured. Alternatively, as illustrated in FIG. 12, the hopping period is configured from a slot (e.g., physical slot number #2) corresponding to the first repetition transmission (Repetition #0) of slots for which a transmission period of PUSCH repetition is configured. In FIG. 12, a frequency hopping pattern may be configured based on a relative slot number that takes physical slot number #2 as slot number #0.

As illustrated in FIG. 12, a hopping period of the frequency hopping is configured to be aligned with a Configured TDW period in the DMRS bundling. Accordingly, the frequency hopping occurs in period units of configured TDWs as illustrated in FIG. 12. Thus, as illustrated in FIG. 12, terminal 200 can perform the DMRS bundling over a plurality of slots in each period of the configured TDW, for example. In other words, terminal 200 need not configure a plurality of actual TDWs in the configured TDW period. As a result, in FIG. 12, the DMRS bundling is applied to terminal 200 using slots as many as the slots configured for the configured TDW, thereby improving the channel estimation accuracy.

For example, as illustrated in FIG. 13, in the PUSCH repetition Type A with available slot counting, a hopping period of the frequency hopping is configured from a head slot (e.g., physical slot number #2) of slots for which a configured TDW in the DMRS bundling is configured. Alternatively, as illustrated in FIG. 13, the hopping period is configured from a slot (e.g., physical slot number #2) corresponding to the first repetition transmission (Repetition #0) of slots for which a transmission period of PUSCH repetition is configured.

Further, in FIG. 13, a frequency hopping pattern may be configured based on a relative slot number that takes physical slot number #2, which is the head slot for which the configured TDW is configured (or head slot for which transmission period of PUSCH repetition is configured), as slot number #0.

As illustrated in FIG. 13, a hopping period of the frequency hopping is easily aligned with a Configured TDW period in the DMRS bundling, as compared to FIG. 6, for example. Accordingly, as illustrated in FIG. 13, the frequency hopping is likely to occur in period units of configured TDWs. Therefore, terminal 200 need not configure a plurality of actual TDWs in the period of the configured TDW. By way of example, a plurality of actual TDWs are configured in one configured TDW in FIG. 6, whereas one actual TDW is configured in one configured TDW in FIG. 13. Thus, as illustrated in FIG. 13, terminal 200 can perform the DMRS bundling over a plurality of slots (e.g., available slots) in each period of the configured TDW, for example. As a result, in FIG. 13, the DMRS bundling is applied to terminal 200 using more slots configured in a configured TDW, thereby improving the channel estimation accuracy.

As above, according to the present aspect, since it is made easier to align the hopping period in the frequency hopping and the Configured TDW period in the DMRS bundling, terminal 200 can perform the DMRS bundling in period units of configured TDWs, thereby preventing deterioration of the improvement effect on the channel estimation accuracy.

Additionally, for example, when the hopping period is explicitly configured (e.g., S103 in FIG. 11: Yes), the frequency hopping pattern determined based on a physical slot number is applied. This makes it possible to align frequency hopping patterns between a plurality of terminals 200, which is advantageous in facilitating scheduling in base station 100 taking into account the plurality of terminals.

[For PUCCH]

Terminal 200 may be configured with, for example, a higher layer parameter for inter-slot frequency hopping (e.g., "interslotFrequencyHopping"). Herein, the "interslotFrequencyHopping" is a parameter that indicates whether to apply (e.g., enabled or disabled) the inter-slot frequency hopping in which PUCCH transmission is performed in different slots.
Further, terminal 200 may be configured with a parameter (e.g., "PUCCH-HoppingInterval") for a hopping period length (hopping interval), for example.
Further, terminal 200 can be, for example, configured with a higher layer parameter for the DMRS bundling (e.g., "PUCCH-DMRS-bundling"). Herein, the "PUCCH-DMRS-bundling" is, for example, a parameter that configures whether to apply the DMRS bundling to PUCCH transmission (e.g., enabled or disabled).
Further, when the DMRS bundling is configured, for example, terminal 200 may determine a configured TDW for application of the DMRS bundling. For example, terminal 200 may be configured with a parameter for a period length of the configured TDW (e.g., "PUCCH-TimeDomainWindowLength").
Terminal 200 may report, to base station 100, period length L of the configured TDW that can be supported by this terminal 200 (e.g., maximum value), as a Capability of terminal 200.
Meanwhile, for example, when period length L of the configured TDW is not explicitly configured, terminal 200 may configure period length L of the configured TDW to a default value. As the default value, for example, the minimum value between the maximum value of period length L of the configured TDW supportable by terminal 200 and a period length for transmission of PUCCH repetition may be configured.
The parameters for the frequency hopping and the DMRS bundling that can be configured for terminal 200 have been each described, thus far.
In PUCCH repetition transmission to which the frequency hopping is applied (enabled), when the inter-slot frequency hopping frequency is configured by the interslotFrequencyHopping and a hopping period length is explicitly configured by the PUCCH-HoppingInterval (e.g., S103 in FIG. 11), terminal 200 configures a hopping period length based on a value explicitly configured by the PUCCH-HoppingInterval (S104 in FIG. 11), for example. Additionally, terminal 200 may control the frequency hopping (e.g., frequency hopping pattern) based on a physical slot number, $n_s$, for example. By way of example, a frequency position, $RB_{start}(n_s)$, at which PUCCH is transmitted in slot #$n_s$ may be determined as in following Equation 7:

$$RB_{start}(n_s) = \begin{cases} RB_0 & \lfloor n_s/N_{FH} \rfloor \ mod \ 2 = 0 \\ RB_1 & \lfloor n_s/N_{FH} \rfloor \ mod \ 2 = 1 \end{cases} \quad \text{... (Equation 7).}$$

Herein, $n_s$ indicates a physical slot number in a radio frame, and $RB_0$ and $RB_1$ are the first RB position and the second RB position configured by PUCCH resource allocation information (e.g., PUCCH resource set). Moreover, $N_{FH}$ indicates a hopping period length in the frequency hopping.
In PUCCH repetition transmission to which the frequency hopping is applied (enabled), when the inter-slot frequency hopping frequency is configured by the interslotFrequencyHopping, a hopping period length is not explicitly configured by the PUCCH-HoppingInterval, and the DMRS-bundling is applied (enabled) by the PUCCH-DMRS-bundling (e.g., S105 in FIG. 11: Yes), terminal 200 configures a hopping period length to the same value as period length L of a configured TDW, for example. Additionally, terminal 200 may control the frequency hopping (e.g., frequency hopping pattern) based on a relative slot number, n', to a transmission period of the PUCCH repetition. By way of example, a frequency position, RB(n'), at which PUCCH is transmitted in slot #n' may be determined as in following Equation 8:

$$RB(n') = \begin{cases} RB_0 & \lfloor n'/N_{FH} \rfloor \ mod \ 2 = 0 \\ RB_1 & \lfloor n'/N_{FH} \rfloor \ mod \ 2 = 1 \end{cases} \quad \text{... (Equation 8).}$$

Herein, n' indicates a relative slot number that increases in value for subsequent consecutive slots, assuming that a slot corresponding to the first PUCCH transmission in the transmission period of the PUCCH repetition is n' = 0. Moreover, $RB_0$ and $RB_1$ are the first RB position and the second RB position configured by PUCCH resource allocation information (e.g., PUCCH resource set). Furthermore, $N_{FH}$ indicates a hopping period length in the frequency hopping, where $N_{FH} = L$.
Further, in PUCCH repetition transmission to which the frequency hopping is applied (enabled), when the inter-slot frequency hopping frequency is configured by the interslotFrequencyHopping, a hopping period length is not explicitly configured by the PUCCH-HoppingInterval, and the DMRS-bundling is not applied (enabled) by the PUCCH-DMRS-bundling (e.g., S105 in FIG. 11: No), terminal 200 determines a hopping period length to one, for example. Additionally, terminal 200 may control the frequency hopping (e.g., frequency hopping pattern) based on a relative slot number, n', to a transmission period of the PUCCH repetition. By way of example, a frequency position, RB(n'), at which PUCCH is transmitted in slot #n' may be determined as in following Equation 9:

$$RB(n') = \begin{cases} RB_0 & n' \; mod \; 2 = 0 \\ RB_1 & n' \; mod \; 2 = 1 \end{cases} \quad \text{... (Equation 9)}.$$

Herein, n' indicates a relative slot number that increases in value for subsequent consecutive slots, assuming that a slot corresponding to the first PUCCH transmission in the transmission period of the PUCCH repetition is n' = 0. Moreover, $RB_0$ and $RB_1$ are the first RB position and the second RB position configured by PUCCH resource allocation information (e.g., PUCCH resource set). Thus, terminal 200 may configure a frequency hopping pattern in which an RB position is switched for each slot, as in NR Rel. 15/16.

Incidentally, base station 100 may perform reception processing of PUCCH and DMRS, assuming the above-described operation of terminal 200 (transmission of PUCCH), for example.

As above, according to the present aspect, since it is made easier to align the hopping period in the frequency hopping and the Configured TDW period in the DMRS bundling even for PUCCH as in the case of PUSCH, terminal 200 can perform the DMRS bundling in period units of configured TDWs, thereby preventing deterioration of the improvement effect on the channel estimation accuracy.

Additionally, for example, when the hopping period is explicitly configured (e.g., S103 in FIG. 11: Yes), the frequency hopping pattern determined based on a physical slot number is applied. This makes it possible to align frequency hopping patterns between a plurality of terminals 200, which is advantageous in facilitating scheduling in base station 100 taking into account the plurality of terminals.

The exemplary operations of base station 100 and terminal 200 have been each described, thus far.

According to the present aspect, base station 100 and terminal 200 perform, based on a transmission period configured for repetition (or Configured TDW period in DMRS bundling applied to repetition) of an uplink signal (e.g., PUSCH or PUCCH), control of frequency hopping in which transmission is performed at the same RB position in a plurality of periods. In the present aspect, for example, when a hopping period of the frequency hopping is not configured for terminal 200 by the control information and the DMRS bundling is applied, base station 100 and terminal 200 perform the control of the frequency hopping based on a relative slot number to the transmission period of the Repetition.

This control allows configuration (or switching) of a frequency hopping pattern in period units of Configured TDWs in the DMRS bundling in the repetition transmission. Thus, according to the present aspect, it is made possible to perform, in the DMRS bundling, the channel estimation using more slots configured in a configured TDW, thereby improving the channel estimation accuracy.

Further, in the present aspect, when the hopping period in the frequency hopping is configured for terminal 200 by the control information, base station 100 and terminal 200 perform the control of the frequency hopping based on a hopping period configured by the control information and a physical slot number. This makes it possible to configure frequency hopping patterns between a plurality of terminals 200 to be the same, thereby simplifying the processing (e.g., scheduling) in base station 100.

Therefore, according to the present aspect, the communication efficiency in uplink can be improved.

(Aspect 2)

The configurations of the base station and the terminal according to the present aspect may be the same as the configurations of base station 100 and terminal 200 according to Aspect 1.

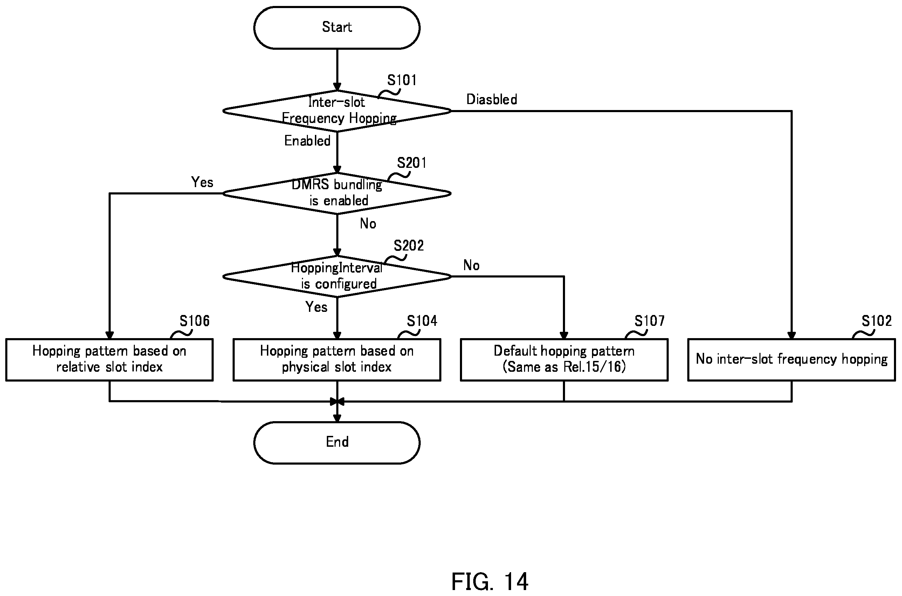

FIG. 14 is a flowchart describing an operation example related to configuration of frequency hopping in base station 100 and terminal 200. In FIG. 14, the same processing as in Aspect 1 (FIG. 11) is denoted by the same reference numeral, and a description thereof will be omitted.

In FIG. 14, when inter-slot frequency hopping is applied to terminal 200 (S101: Enabled), base station 100 and terminal 200 determine whether DMRS bundling is applied to terminal 200 (S201).

When the DMRS bundling is applied to terminal 200 (S201: Yes), base station 100 and terminal 200 may configure a frequency hopping pattern based on a relative slot number (e.g., n') to a transmission period of repetition transmission (or period of Configured TDW in DMRS bundling), for example (S106).

On the other hand, the DMRS bundling is not applied to terminal 200 (S201: No), base station 100 and terminal 200 determine whether a hopping period is configured for (e.g., explicitly indicated to) terminal 200 (S202).

When the hopping period is configured for terminal 200 (S202: Yes), base station 100 and terminal 200 may configure a frequency hopping pattern based on a physical slot number (e.g., $n_s$), for example (S104). On the other hand, when the hopping period is not configured for terminal 200 (S202: No), base station 100 and terminal 200 may configure a default hopping pattern, for example (S107). Here, the default hopping pattern may be, for example, a hopping pattern similar to that in NR Rel. 15/16 (e.g., Equation 1 or Equation 2).

The operation example related to the configuration of the frequency hopping in base station 100 and terminal 200 has been described, thus far.

Thus, according to the present aspect, when the DMRS bundling is applied to terminal 200, base station 100 and terminal 200 determine a frequency hopping pattern based on a relative slot number to a transmission period (or Configured TDW period in DMRS bundling) configured for repetition transmission. For example, in the present aspect, when the DMRS bundling is applied, base station 100 and terminal 200 may apply the frequency hopping that is based on a relative slot number (e.g., n') without depending on the presence or absence of the configuration of the hopping period.

Hereinafter, a configuration example of a frequency hopping pattern in each of PUSCH and PUCCH will be described.

[For PUSCH]

For example, terminal 200 may be configured with (or notified of) the following information on the frequency hopping.

Terminal 200 may be configured with a higher layer parameter (e.g., frequencyHopping) for a frequency hopping mode for example. Herein, the frequencyHopping is a parameter that configures any of a plurality of frequency hopping modes, such as intra-slot frequency hopping or inter-slot frequency hopping.

Further, terminal 200 may determine whether to apply the frequency hopping (e.g., enabled or disabled), based on a value of a frequency hopping field included in a DCI, for example. By way of example, when the value of the frequency hopping field is set to "1," the frequency hopping with the mode configured by the "frequencyHopping" is applied (enabled), and when the value of the frequency hopping field is different from "1" (e.g., when "0"), the frequency hopping need not be applied (disabled).

Meanwhile, when the DCI includes no frequency hopping field or data is transmitted in accordance with resource allocation indicated by RRC (e.g., in case of Configured grant Type 1), for example, terminal 200 may determine whether to apply the frequency hopping depending on whether a parameter for a frequency hopping offset, "frequencyHoppingOffset," is configured. For example, when the frequency hopping offset, "frequencyHoppingOffset," is configured, the frequency hopping with the mode configured by the "frequencyHopping" is applied (enabled), and when no frequency hopping offset, "frequencyHoppingOffset," is configured, the frequency hopping need not be applied (disabled).

Further, terminal 200 may be configured with a parameter for a hopping period length (e.g., "PUSCH-Hopping-gInterval"), for example.

For example, terminal 200 may be configured with (or notified of) the following information on the DMRS bundling.

Terminal 200 can be, for example, configured with a higher layer parameter for the DMRS bundling (e.g., "PUSCH-DMRS-bundling"). Herein, the "PUSCH-DMRS-bundling" is, for example, a parameter that configures whether to apply the DMRS bundling to PUSCH transmission (e.g., enabled or disabled).

Further, when the DMRS bundling is configured, for example, terminal 200 may determine a configured TDW for application of the DMRS bundling. For example, terminal 200 may be configured with a parameter for a period length of the configured TDW (e.g., "PUSCH-TimeDomainWindowLength").

Terminal 200 may report, to base station 100, period length L of the configured TDW that can be supported by this terminal 200 (e.g., maximum value), as a Capability of terminal 200.

Meanwhile, for example, when period length L of the configured TDW is not explicitly configured, terminal 200 may configure period length L of the configured TDW to a default value. As the default value, for example, the minimum value between the maximum value of period length L of the configured TDW supportable by terminal 200 and a period length for transmission of PUSCH repetition may be configured.

The parameters for the frequency hopping and the DMRS bundling that can be configured for terminal 200 have been each described, thus far.

In PUSCH repetition transmission to which the frequency hopping is applied (enabled), when the inter-slot frequency hopping frequency is configured by the frequencyHopping and the DMRS-bundling is not applied (enabled) by the PUSCH-DMRS-bundling (e.g., S201 in FIG. 14: No), terminal 200 may control the frequency hopping (e.g., frequency hopping pattern) based on a physical slot number, $n_s$, for example. By way of example, a frequency position, $RB_{start}(n_s)$, at which PUSCH is transmitted in slot #$n_s$ may be determined as in following Equation 10:

$$RB_{start}(n_s) = \begin{cases} RB_{start} & \lfloor n_s/N_{FH} \rfloor \ mod \ 2 = 0 \\ (RB_{start} + RB_{offset}) \ mod \ N_{BWP}^{size} & \lfloor n_s/N_{FH} \rfloor \ mod \ 2 = 1 \end{cases} \quad \text{... (Equation 10)}.$$

Herein, $n_s$ indicates a physical slot number in a radio frame, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for terminal 200.

Moreover, $N_{FH}$ indicates a hopping period length in the frequency hopping. For example, when a hopping period length is explicitly configured by the PUSCH-HoppingInterval (e.g., S202 in FIG. 14: Yes), the hopping period length, $N_{FH}$, may be configured based on a value explicitly set by the PUSCH-HoppingInterval. On the other hand, for example, when the hopping period length is not explicitly configured by the PUSCH-HoppingInterval (e.g., S202 in FIG. 14: No), the hopping period length, $N_{FH}$, may be set to one.

Further, in PUSCH repetition transmission to which the frequency hopping is applied (enabled), when the inter-slot frequency hopping frequency is configured by the frequencyHopping and the DMRS-bundling is applied (enabled) by the PUSCH-DMRS-bundling (e.g., S201 in FIG. 14: Yes), terminal 200 may control the frequency hopping (e.g., frequency hopping pattern) based on a relative slot number, n', to a transmission period of the PUSCH repetition, for example. By way of example, a frequency position, RB(n'), at which PUSCH is transmitted in slot #n' may be determined as in following Equation 11:

$$RB(n') = \begin{cases} RB_{start} & \lfloor n'/N_{FH} \rfloor \ mod \ 2 = 0 \\ (RB_{start} + RB_{offset}) \ mod \ N_{BWP}^{size} & \lfloor n'/N_{FH} \rfloor \ mod \ 2 = 1 \end{cases} \quad \dots \text{(Equation 11)}.$$

Herein, n' indicates a relative slot number that increases in value for subsequent consecutive slots, assuming that a slot corresponding to the first PUSCH transmission in the transmission period of the PUSCH repetition is n' = 0. Moreover, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for terminal 200.

Moreover, $N_{FH}$ indicates a hopping period length in the frequency hopping. For example, when a hopping period length is explicitly configured by the PUSCH-HoppingInterval, the hopping period length, $N_{FH}$, may be configured based on a value explicitly set by the PUSCH-HoppingInterval. On the other hand, for example, when the hopping period length is not explicitly configured by the PUSCH-HoppingInterval, the hopping period length, $N_{FH}$, may be set to the same value as the period length of the configured TDW ($N_{FH}$ = L).

Incidentally, base station 100 may perform reception processing of PUSCH and DMRS, assuming the above-described operation of terminal 200 (transmission of PUSCH), for example.

As above, according to the present aspect, since it is made easier to align the hopping period in the frequency hopping and the Configured TDW period in the DMRS bundling when the DMRS bundling is applied, terminal 200 can perform the DMRS bundling in period units of configured TDWs, thereby preventing deterioration of the improvement effect on the channel estimation accuracy.

Additionally, in the present aspect, when the DMRS bundling is not applied, the frequency hopping pattern that is determined based on a physical slot is applied. This makes it possible to align frequency hopping patterns between a plurality of terminals 200, which is advantageous in facilitating scheduling in base station 100 taking into account the plurality of terminals.

[For PUCCH]

Terminal 200 may be configured with, for example, a higher layer parameter for inter-slot frequency hopping (e.g., "interslotFrequencyHopping"). Herein, the "interslotFrequencyHopping" is a parameter that indicates whether to apply (e.g., enabled or disabled) the inter-slot frequency hopping.

Terminal 200 may be configured with a parameter for a hopping period length (e.g., "PUCCH-HoppingInterval"), for example.

Further, terminal 200 can be, for example, configured with a higher layer parameter for the DMRS bundling (e.g., "PUCCH-DMRS-bundling"). Herein, the "PUCCH-DMRS-bundling" is, for example, a parameter that configures whether to apply the DMRS bundling to PUCCH transmission (e.g., enabled or disabled).

Further, when the DMRS bundling is configured, for example, terminal 200 may determine a configured TDW for application of the DMRS bundling. For example, terminal 200 may be configured with a parameter for a period length of the configured TDW (e.g., "PUCCH-TimeDomainWindowLength").

Terminal 200 may report, to base station 100, period length L of the configured TDW that can be supported by this terminal 200 (e.g., maximum value), as a Capability of terminal 200.

Meanwhile, for example, when period length L of the configured TDW is not explicitly configured, terminal 200 may configure period length L of the configured TDW to a default value. As the default value, for example, the minimum value between the maximum value of period length L of the configured TDW supportable by terminal 200 and a period length for transmission of PUCCH repetition may be configured.

The parameters for the frequency hopping and the DMRS bundling that can be configured for terminal 200 have been each described, thus far.

In PUCCH repetition transmission to which the frequency hopping is applied (enabled), when the inter-slot frequency hopping frequency is configured by the interslotFrequencyHopping, a hopping period length is explicitly configured by the PUCCH-HoppingInterval, and the DMRS-bundling is not applied (enabled) by the PUCCH-DMRS-bundling (e.g., S202 in FIG. 14: Yes), terminal 200 configures a hopping period length based on a value explicitly configured by the PUCCH-HoppingInterval (S104 in FIG. 14), for example. Additionally, terminal 200 may control the frequency hopping (e.g., frequency hopping pattern) based on a physical slot number, $n_s$, for example. By way of example, a frequency position, $RB_{start}(n_s)$, at which PUCCH is transmitted in slot #$n_s$ may be determined as in following Equation 12:

$$RB_{start}(n_s) = \begin{cases} RB_0 & \lfloor n_s/N_{FH} \rfloor \ mod \ 2 = 0 \\ RB_1 & \lfloor n_s/N_{FH} \rfloor \ mod \ 2 = 1 \end{cases} \quad \text{... (Equation 12).}$$

Herein, $n_s$ indicates a physical slot number in a radio frame, and $RB_0$ and $RB_1$ are the first RB position and the second RB position configured by PUCCH resource allocation information (e.g., PUCCH resource set). Moreover, $N_{FH}$ indicates a hopping period length in the frequency hopping.

Further, in PUCCH repetition transmission to which the frequency hopping is applied (enabled), when the inter-slot frequency hopping frequency is configured by the interslotFrequencyHopping and the DMRS-bundling is applied (enabled) by the PUCCH-DMRS-bundling (e.g., S201 in FIG. 14: Yes), terminal 200 may control the frequency hopping (e.g., frequency hopping pattern) based on a relative slot number, n', to a transmission period of the PUCCH repetition. By way of example, a frequency position, RB(n'), at which PUCCH is transmitted in slot #n' may be determined as in following Equation 13:

$$RB(n') = \begin{cases} RB_0 & \lfloor n'/N_{FH} \rfloor \ mod \ 2 = 0 \\ RB_1 & \lfloor n'/N_{FH} \rfloor \ mod \ 2 = 1 \end{cases} \quad \text{... (Equation 13).}$$

Herein, n' indicates a relative slot number that increases in value for subsequent consecutive slots, assuming that a slot corresponding to the first PUCCH transmission in the transmission period of the PUCCH repetition is n' = 0. Moreover, $RB_0$ and $RB_1$ are the first RB position and the second RB position configured by PUCCH resource allocation information (e.g., PUCCH resource set).

Moreover, $N_{FH}$ indicates a hopping period length in the frequency hopping. For example, when a hopping period length is explicitly configured by the PUCCH-HoppingInterval, the hopping period length, $N_{FH}$, may be configured based on a value explicitly set by the PUCCH-HoppingInterval. On the other hand, for example, when the hopping period length is not explicitly configured by the PUCCH-HoppingInterval, the hopping period length, $N_{FH}$, may be set to the same value as the period length of the configured TDW ($N_{FH} = L$).

Further, in PUCCH repetition transmission to which the frequency hopping is applied (enabled), when the inter-slot frequency hopping frequency is configured by the interslotFrequencyHopping, a hopping period length is not explicitly configured by the PUCCH-HoppingInterval, and the DMRS-bundling is not applied (enabled) by the PUCCH-DMRS-bundling (e.g., S202 in FIG. 14: No), terminal 200 determines a hopping period length to one, for example. Additionally, terminal 200 may control the frequency hopping (e.g., frequency hopping pattern) based on a relative slot number, n', to a transmission period of the PUCCH repetition. By way of example, a frequency position, RB(n'), at which PUCCH is transmitted in slot #n' may be determined as in following Equation 14:

$$RB(n') = \begin{cases} RB_0 & n' \ mod \ 2 = 0 \\ RB_1 & n' \ mod \ 2 = 1 \end{cases} \quad \text{... (Equation 14).}$$

Herein, n' indicates a relative slot number that increases in value for subsequent consecutive slots, assuming that a slot corresponding to the first PUCCH transmission in the transmission period of the PUCCH repetition is n' = 0. Moreover, $RB_0$ and $RB_1$ are the first RB position and the second RB position configured by PUCCH resource allocation information (e.g., PUCCH resource set). Thus, terminal 200 may configure a frequency hopping pattern in which an RB position is switched for each slot, as in NR Rel. 15/16.

Incidentally, base station 100 may perform reception processing of PUCCH and DMRS, assuming the above-described operation of terminal 200 (transmission of PUCCH), for example.

As above, according to the present aspect, even for PUCCH as in the case of PUSCH, since it is made easier to align the hopping period in the frequency hopping and the Configured TDW period in the DMRS bundling when the DMRS bundling is applied, terminal 200 can perform the DMRS bundling in period units of configured TDWs, thereby preventing deterioration of the improvement effect on the channel estimation accuracy.

Additionally, for example, when the hopping period is explicitly configured and the DMRS bundling is not applied (e.g., S202 in FIG. 14: Yes), the frequency hopping pattern determined based on a physical slot number is applied. This makes it possible to align frequency hopping patterns between a plurality of terminals 200, which is advantageous in facilitating scheduling in base station 100 taking into account the plurality of terminals.

The exemplary operations of base station 100 and terminal 200 have been each described, thus far.

According to the present aspect, base station 100 and terminal 200 perform, based on a transmission period configured for repetition (or Configured TDW period in DMRS bundling applied to repetition) of an uplink signal (e.g., PUSCH or PUCCH), control of frequency hopping in which transmission is performed at the same RB position in a plurality of periods. In the present aspect, for example, when the DMRS bundling is applied, base station 100 and terminal 200 perform the control of the frequency hopping based on a relative slot number to the transmission period of the Repetition.

This control allows, when the DMRS bundling is applied, configuration (or switching) of a frequency hopping pattern in period units of Configured TDWs in the DMRS bundling in the repetition transmission. Thus, according to the present aspect, it is made possible to perform, in the DMRS bundling, the channel estimation using more slots configured in a configured TDW, thereby improving the channel estimation accuracy.

Further, in the present aspect, when the hopping period in the frequency hopping is configured for terminal 200 by the control information in a situation where the DMRS bundling is not applied, base station 100 and terminal 200 perform the control of the frequency hopping based on a hopping period configured by the control information and a physical slot number. This makes it possible to configure frequency hopping patterns between a plurality of terminals 200 to be the same, thereby simplifying the processing (e.g., scheduling) in base station 100.

Therefore, according to the present aspect, the communication efficiency in uplink can be improved.

(Aspect 3)

The configurations of the base station and the terminal according to the present aspect may be the same as the configurations of base station 100 and terminal 200 according to Aspect 1 or Aspect 2.

In NR Rel. 15/16, a slot format can be configured by a higher layer parameter (e.g., "TDD-UL-DL-pattern"), for example. The TDD-UL-DL-pattern may include, for example, a parameter for periodicity in which the slot format is configured (e.g., "dl-UL-TransmissionPeriodicity"), a parameter for the number of downlink slots included in the periodicity (e.g., "nrofDownlinkSlots"), a parameter for the number of uplink slots included in the periodicity (e.g., "nrofUplinkSlots"), a parameter for the number of downlink symbols included in the periodicity (e.g., "nrofDownlinkSymbols"), and a parameter for the number of uplink symbols included in the periodicity (e.g., "nrofUplinkSymbols").

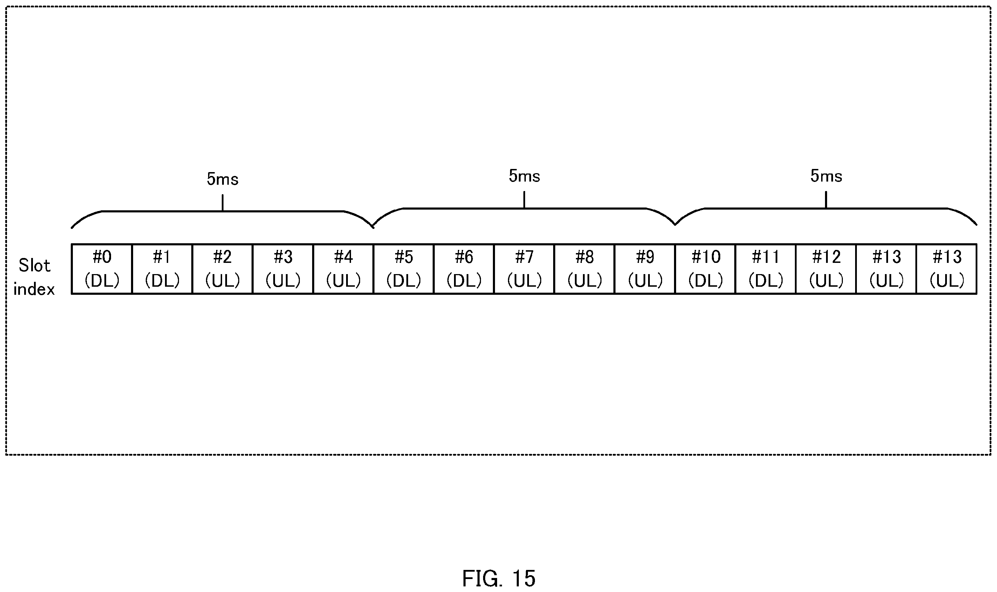

For example, the parameter "dl-UL-TransmissionPeriodicity for periodicity" may be set to {0.5 ms, 0.625 ms, 1 ms, 1.25 ms, 2 ms, 2.5 ms, 3 ms, 4 ms, 5 ms, and/or 10 ms}. FIG. 15 illustrates an exemplary slot format that is configured by the TDD-UL-DL-pattern. In the example illustrated in FIG. 15, the slot format is configured where dl-UL-TransmissionPeriodicity = 5 ms, nrofDownlinkSlots = 2, and nrofUplinkSlots = 3. Further, in FIG. 15, for example, a subcarrier spacing (SCS) is 15 kHz and a time length of one slot is 1 ms. Accordingly, as illustrated in FIG. 15, the slot pattern including two downlink slots and three uplink slots is repeated every 5 ms.

Here, when a hopping period length and a period length of a configured TDW have the same value as the periodicity configured by the TDD-UL-DL-pattern, a frequency hopping pattern determined based on a physical slot number and a frequency hopping pattern determined based on a relative slot number may be identical to each other.

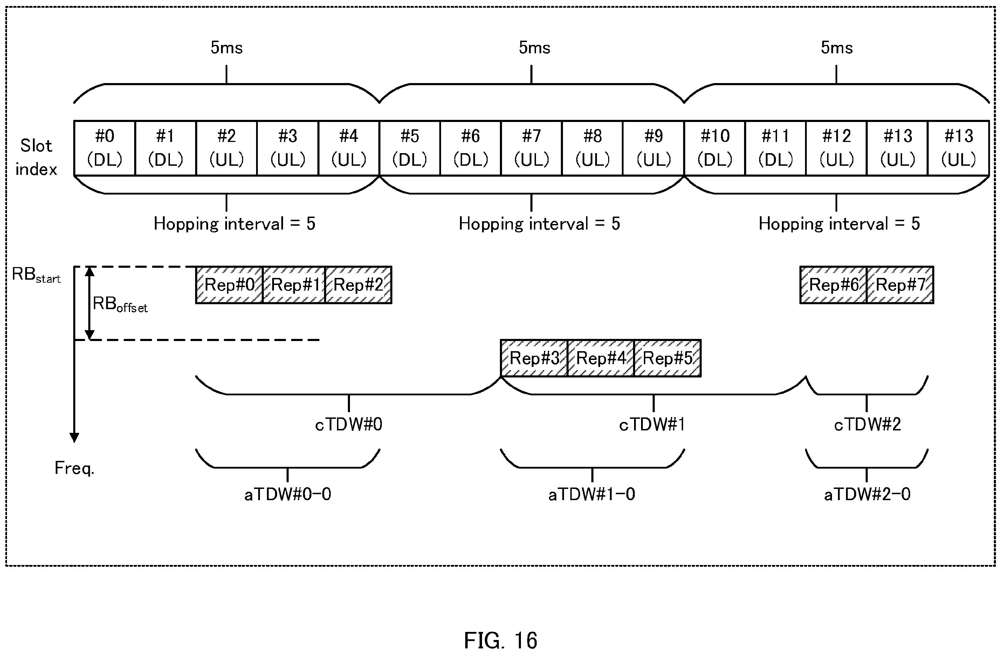

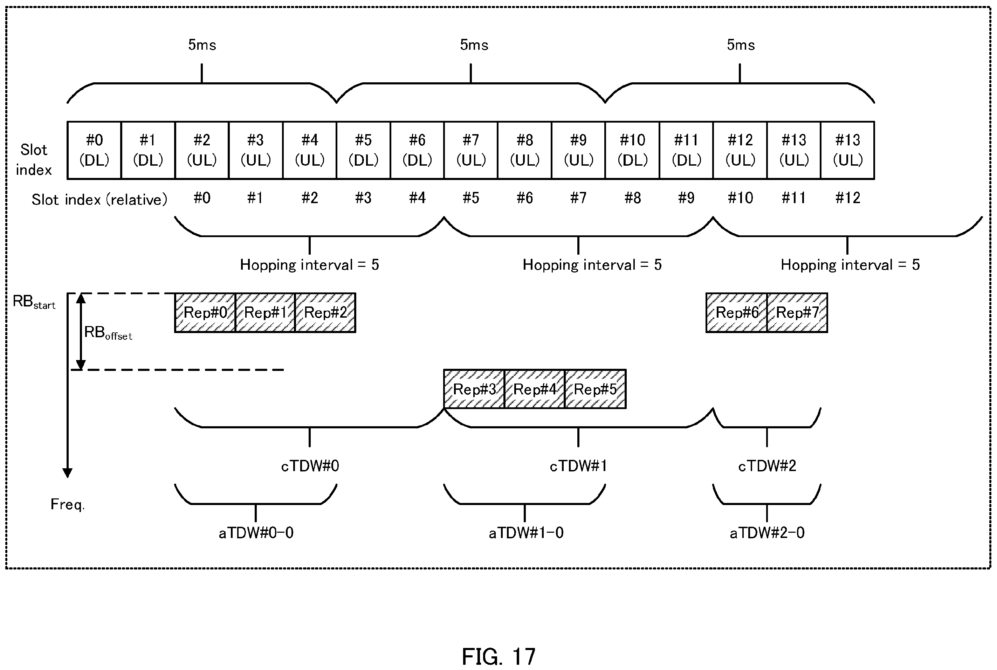

FIG. 16 and FIG. 17 each illustrate an example of PUSCH repetition to which the frequency hopping and the DMRS bundling are applied of a case where dl-UL-TransmissionPeriodicity = 5 ms, nrofDownlinkSlots = 2, nrofUplinkSlots = 3, and a hopping period length and a period length of a configured TDW have the same value, 5ms, as the periodicity configured by the TDD-UL-DL-pattern.

FIG. 16 illustrates a configuration example of a frequency hopping pattern determined based on a physical slot number, and FIG. 17 illustrates a configuration example of a frequency hopping pattern determined based on a relative slot number to a transmission period (or configured TDW in DMRS bundling) in repetition transmission. The frequency hopping pattern (e.g., RB position (or hopping) in each slot) in each of FIGS. 16 and 17 is the same. Therefore, a configuration of an actual TDW in the DMRS bundling is the same in FIGS. 16 and 17.

According to the claimed invention, a possible value for each of the hopping period length and the period length of the configured TDW may include a configurable value (supportable value) for a parameter (e.g., dl-UL-TransmissionPeriodicity) for periodicity in which a slot format is configured. For example, a possible value for each of the hopping period length and the period length of the configured TDW may include at least one value of {0.5 ms, 0.625 ms, 1 ms, 1.25 ms, 2 ms, 2.5 ms, 3 ms, 4 ms, 5 ms, and/or 10 ms}.

Further, when the hopping period length and the configured TDW period length are identical to each other and the same as a value set by the dl-UL-TransmissionPeriodicity, terminal 200 may configure a frequency hopping pattern in the frequency hopping to a default pattern (prescribed pattern).

For example, for PUSCH, the default pattern may be a frequency hopping pattern determined based on a physical slot number. By way of example, in the default pattern for PUSCH, a frequency position, $RB_{start}(n_s)$, at which PUSCH is transmitted based on the physical slot number, $n_s$, may be determined as in following Equation 15:

$$RB_{start}(n_s) = \begin{cases} RB_{start} & n_s \bmod 2 = 0 \\ (RB_{start} + RB_{offset}) \bmod N_{BWP}^{size} & n_s \bmod 2 = 1 \end{cases} \quad \text{... (Equation 15)}.$$

Herein, $n_s$ indicates a physical slot number in a radio frame, $RB_{start}$ indicates a head RB position calculated by frequency resource allocation information included in at least one of the DCI and RRC, $RB_{offset}$ indicates an offet amount between two RB positions used for transmission in the frequency hopping, and $N_{BWP}^{size}$ indicates the size of BWP configured for terminal 200.

For example, for PUCCH, the default pattern may be a frequency hopping pattern determined based on a relative slot number to a transmission period of PUCCH repetition transmission (or Configured TDW period in DMRS bundling). By way of example, in the default pattern for PUCCH, a frequency position, RB(n'), at which PUCCH is transmitted based on the relative slot number, n', to the transmission period of the PUCCH repetition transmission may be determined as in following Equation 16:

$$RB(n') = \begin{cases} RB_0 & n' \bmod 2 = 0 \\ RB_1 & n' \bmod 2 = 1 \end{cases} \quad \text{... (Equation 16)}.$$

Herein, n' indicates a relative slot number that increases in value for subsequent consecutive slots, assuming that a slot corresponding to the first PUCCH transmission in the transmission period of the PUCCH repetition is n' = 0. Moreover, $RB_0$ and $RB_1$ are the first RB position and the second RB position configured by PUCCH resource allocation information (e.g., PUCCH resource set).

According to the present aspect, when both the hopping period length in the frequency hopping and the period length of the configured TDW in the DMRS bundling are identical to a value set by the dl-UL-TransmissionPeriodicity, base station 100 and terminal 200 need not change (or switch) a frequency hopping from the default pattern. Further, also in the default pattern, the hopping period in the frequency hopping and the Configured TDW period in the DMRS bundling can be aligned with each other as in Aspect 1 or Aspect 2. Therefore, in the present aspect, it is possible to simplify the configuration processing of a hopping pattern (e.g., condition branching processing) in terminal 200 and to perform the DMRS bundling in period units of configured TDWs, thereby preventing deterioration of the improvement effect on the channel estimation accuracy.

Note that possible values for the hopping period length and the period length of the configured TDW may include other values in addition to the values supported by the parameter "dl-UL-TransmissionPeriodicity for periodicity" in which a slot format is configured. Further, ranges of possible values of both the hopping period length and the period length of the configured TDW may be the same, or possible values of either one may be a subset of possible values of the other.

A non-limiting example of the present disclosure has been described, thus far.

(Other Aspects)

(1) In the aspects described above, the aspect to be applied to each of PUCCH and PUSCH may be varied. For example, Aspect 1 may be applied to PUSCH, and Aspect 2 may be applied to PUCCH. Alternatively, for example, any of the aspects described above may be applied to either of the channels, PUSCH or PUCCH, and a default inter-slot frequency hopping pattern may be applied to the other of the channels, PUSCH or PUCCH, without applying the aspects described above. For example, the default inter-slot frequency hopping pattern may be a frequency hopping pattern determined based on a physical slot number or may be a frequency hopping pattern determined based on a relative slot number.

(2) The application example for PUSCH described in each aspect mentioned above may be applied to PUCCH.

Alternatively, the application example for PUCCH described in each aspect mentioned above may be applied to PUSCH.

(3) In each aspect described above, the PUSCH repetition Type A and the PUCCH repetition in which a signal is transmitted over a plurality of slots have been each described as an example, but a non-limiting example of the present disclosure may be applied to the PUSCH repetition Type B. When the present disclosure is applied to the PUSCH repetition Type B, the "inter-slot channel estimation" and the "inter-slot frequency hopping" may be replaced with "inter-Repetition channel estimation" and "inter-Repetition frequency hopping," respectively.

Further, a non-limiting example of the present disclosure may be applied to, for example, "TB processing over Multi-Slot PUSCH (TBoMS)" in which a Transport Block Size (TBS) is determined by multiplying a TBS calculated from a resource amount allocated per slot by a scaling factor greater than one and transmission is then performed using a plurality of slots.

Further, a non-limiting example of the present disclosure may be applied to, for example, PUCCH repetition in units of subslots. When the present disclosure is applied to the PUCCH repetition in units of subslots, the "inter-slot channel estimation" and "inter-slot frequency hopping" may be replaced with "inter-subslot channel estimation" and "inter-subslot frequency hopping," respectively.

Besides, for example, the aspect to be applied may be varied depending on the Repetition method of each of PUSCH and PUCCH. Alternatively, for example, any of the aspects described above may be applied to the Repetition method of any one of the channels, PUSCH and PUCCH, and a default inter-slot frequency hopping pattern may be applied to the channel to which the aspects described above are not applied. For example, the default inter-slot frequency hopping pattern may be a frequency hopping pattern determined based on a physical slot number or may be a frequency hopping pattern determined based on a relative slot number.

(4) The parameter for the hopping period length in each aspect described above (e.g., PUSCH-HoppingInterval or PUCCH-HoppingInterval) may be a cell-specific parameter or a terminal-specific parameter.

For example, when the parameter for the hopping period length is the cell-specific parameter, an inter-slot frequency hopping pattern may be a frequency hopping pattern determined based on a physical slot number, whereas, when the parameter for the hopping period length is the terminal-specific parameter, an inter-slot frequency hopping pattern may be a frequency hopping pattern determined based on a relative slot number.

Further, for example, when the parameter for the hopping period length is the cell-specific parameter, an inter-slot frequency hopping pattern may be a frequency hopping pattern determined based on a physical slot number, whereas, when the parameter for the hopping period length is the terminal-specific parameter, any of the aspects described above may be applied.

(5) Whether to apply each aspect described above may be varied depending on a start position of repetition transmission. For example, when the start slot position of the repetition transmission is a head slot position of a frequency hopping pattern determined based on a physical slot number, a default hopping pattern may be applied, whereas, when the start slot position of the repetition transmission is a position different from the head slot position of the frequency hopping pattern determined based on the physical slot number, any of the aspects described above or a frequency hopping pattern determined based on a relative slot number may be applied.

(6) In a non-limiting example of the present disclosure, PUSCH and PUCCH have been each described as an example, but the type of channel or signal may be different from PUSCH and PUCCH. For example, a non-limiting example of the present disclosure may be applied to Repetition of a Sounding Reference Signal (SRS) or a Physical Random Access Channel (PRACH). Further, a non-limiting example of the present disclosure may be applied to transmission in downlink or sidelink, without limitation to uplink transmission.

(7) In a non-limiting example of the present disclosure, a frame number may be added to the determination of a frequency hopping pattern based on a physical slot number or a relative slot number in the aspects described above.

The names of the control information and the higher layer parameter used in a non-limiting example of the present disclosure are merely exemplary, and other names may also be used. Further, the number of times of Repetition, the hopping period, the period length of a configured TDW, the period length of an actual TDW, the parameters for the slot format (e.g., periodicity, the number of slots, or the number of symbols), or the value of a parameter such as the SCS, which have been exemplified in each aspect, are merely exemplary, and other values may be possible.

Further, in a non-limiting example of the present disclosure, the configuration methods of the parameters for terminal 200 may be, for example, configured (or indicated) from base station 100 for (to) terminal 200 by at least one of downlink control information (e.g., DCI) and a higher layer parameter, or may be previously defined by the standards and previously configured for terminal 200, without limitation to the examples described above.

In the description of the above-described aspects, the term such as "part" or "portion" or the term ending with a suffix such as "-er" "-or" or "-ar" may be interchangeably replaced with another term, such as "circuit (circuitry)," "device," "unit," or "module."

(Complements)

Information indicating whether terminal 200 supports the functions, operations, or processes that have been described in the above-mentioned aspects and variations may be transmitted (or indicated) from terminal 200 to base station 100, as capability information or a capability parameter for terminal 200, for example.

The capacity information may include information elements (IEs) that individually indicate whether terminal 200 supports at least one of the functions, operations, or processes that have been described in the above-mentioned aspects and variations. Alternatively, the capability information may include information elements that indicate whether terminal 200 supports a combination of any two or more of the functions, operations, or processes that have been described in the above-mentioned aspects and variations.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. By way of example, base station 100 may control frequency hopping, based on the capability information received from terminal 200.

Note that, in a case where terminal 200 does not entirely support the functions, operations, or processes described in the above-mentioned aspects and variations, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may serve as a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the aspect(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stacks>

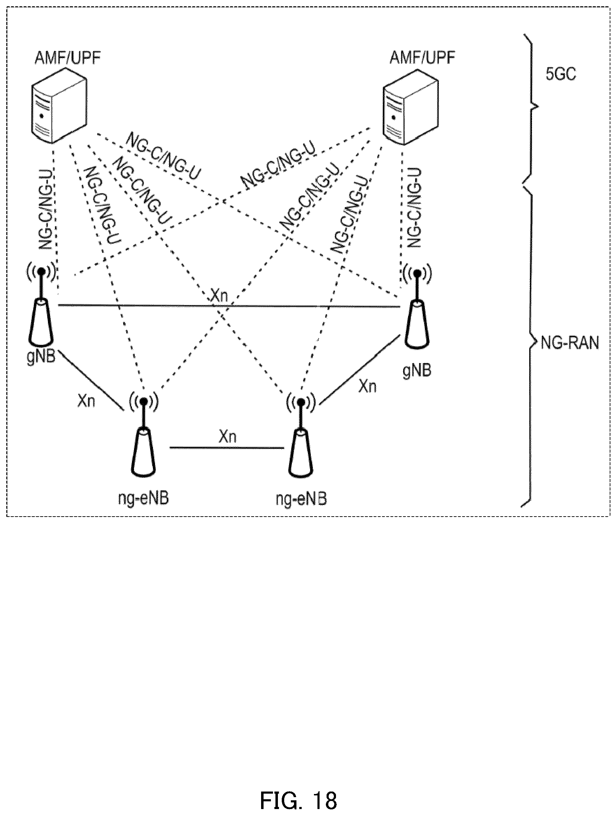

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).
For example, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in FIG. 18 (see e.g., 3GPP TS 38.300 v15.6.0, section 4).
The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

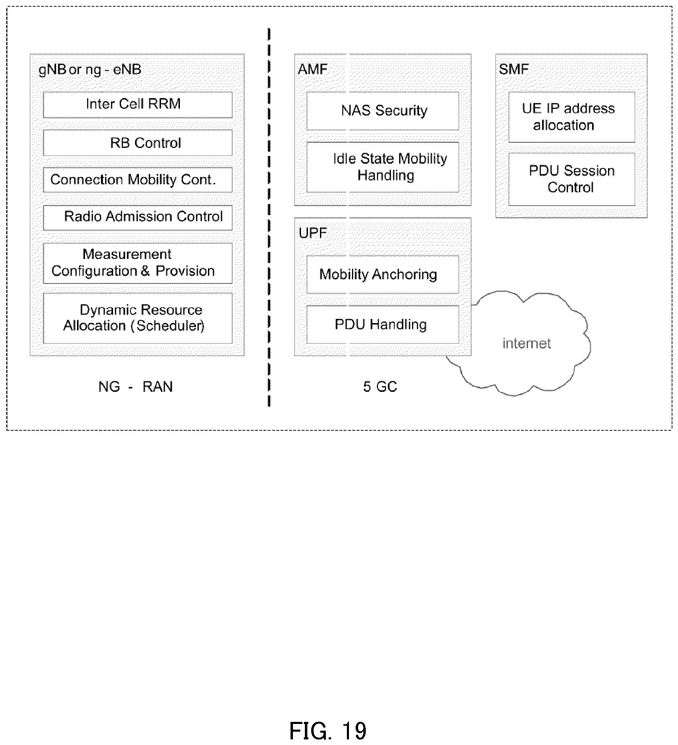

FIG. 19 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;

- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedures>

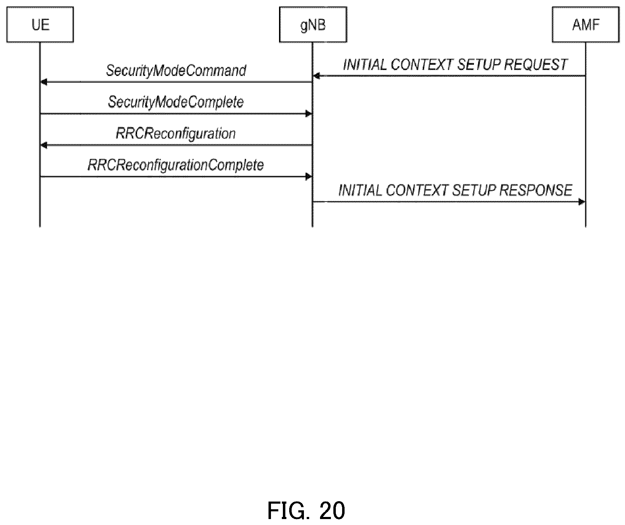

FIG. 20 illustrates some interactions between a UE, gNB, and AMF (a 5GC Entity) performed in the context of a transition of the UE from RRC_IDLE to RRC_CONNECTED for the NAS part (see TS 38 300 v15.6.0).

RRC is a higher layer signaling (protocol) used for UE and gNB configuration. With this transition, the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

<Usage Scenarios of IMT for 2020 and beyond>

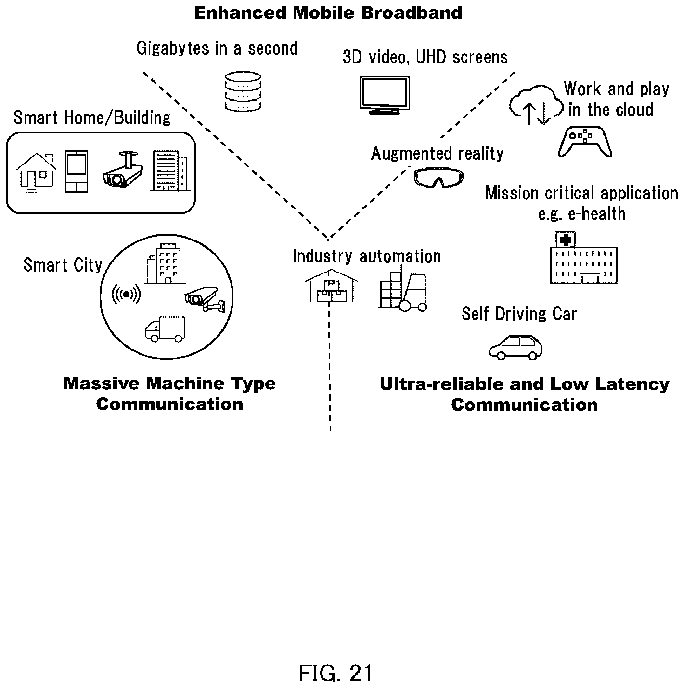

FIG. 21 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 21 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-latency sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, e.g., as illustrated above with reference to FIG. 20. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

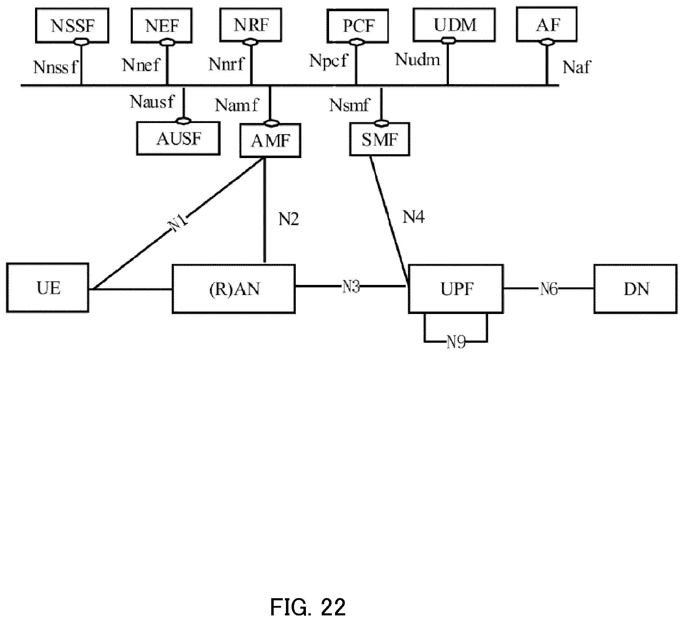

FIG. 22 illustrates a 5G NR non-roaming reference architecture (see TS 23.501 v16.1.0, section 4.23). An Application Function (AF) ( e.g., an external application server hosting 5G services, exemplarily described in FIG. 21) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 22 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each aspect described above can be partly or entirely realized by an LSI such as an integrated circuit, and each process described in the each aspect may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

Industrial Applicability

An exemplary aspect of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A communication apparatus (200), comprising:

   control circuitry, which is configured to perform, based on a transmission period configured for repetition transmission of a signal, control of frequency hopping in which transmission is performed at the same frequency position in the transmission period; and
   transmission circuitry, which is configured to transmit the signal in accordance with the control of the frequency hopping,
   wherein the transmission period includes a plurality of slots,
   **characterized in that**
   a configurable value for each of a hopping interval and a period length includes a configurable value for a parameter on periodicity in which a slot format is configured in a TDD transmission, the hopping interval being an interval at which the transmission is performed at the same frequency position, the period length being a length during which channel estimation is performed in the transmission period.

2. The communication apparatus according to claim 1, wherein:

   the control circuitry generates a demodulation reference signal, based on a bundle period for the demodulation reference signal, and
   the transmission circuitry transmits the demodulation reference signal.

3. The communication apparatus according to claim 2, wherein the bundle period is a period for bundling the demodulation reference signal.

4. The communication apparatus according to claim 2, wherein:

the transmission period is indicated from a base station (100) by a higher layer parameter, and a possible value for the hopping interval is a subset of a possible value for the bundle period.

5. The communication apparatus according to claim 2, wherein, in a case where the signal is a Physical Uplink Shared Channel, PUSCH, a frequency position at which the signal is transmitted is determined based on a physical slot number, and, in a case where the signal is a Physical Uplink Control Channel, PUCCH, a frequency position at which the signal is transmitted is determined based on a relative slot number.

6. The communication apparatus according to claim 2, wherein information on the bundle period is indicated from a base station (100) by a higher layer signal.

7. The communication apparatus according to claim 2, wherein information on the bundle period is determined based on a Capability of the communication apparatus.

8. The communication apparatus according to claim 1, wherein the configurable value for each of the hopping interval and the period length includes at least one of 0.5 ms, 0.625 ms, 1 ms, 1.25 ms, 2 ms, 2.5 ms, 3 ms, 4 ms, 5 ms, and/or 10 ms.

9. The communication apparatus according to claim 1, wherein the control circuitry configures a hopping pattern in the frequency hopping to a prescribed pattern.

10. The communication apparatus according to claim 9, wherein the prescribed pattern is a hopping pattern that is determined based on a physical slot number.

11. The communication apparatus according to claim 9, wherein, in a case where the frequency hopping is configured and channel estimation is applied, the prescribed pattern is a hopping pattern that is determined based on a slot number that is relative to the transmission period, in a case where the channel estimation using at least one slot in the transmission period is applied.

12. A communication apparatus (100), comprising:

   control circuitry, which is configured to perform, based on a transmission period configured for repetition transmission of a signal, control of frequency hopping in which transmission is performed at the same frequency position in the transmission period; and
   reception circuitry, which is configured to receive the signal in accordance with the control of the frequency hopping,
   wherein the transmission period includes a plurality of slots,
   **characterized in that**
   a configurable value for each of a hopping interval and a period length includes a configurable value for a parameter on periodicity in which a slot format is configured in a TDD transmission, the hopping interval being an interval at which the transmission is performed at the same frequency position, the period length being a length during which channel estimation is performed in the transmission period.

13. A communication method, comprising:

   performing, by a communication apparatus (200), based on a transmission period configured for repetition transmission of a signal, control of frequency hopping in which transmission is performed at the same frequency position in the transmission period; and
   transmitting, by the communication apparatus, the signal in accordance with the control of the frequency hopping,
   wherein the transmission period includes a plurality of slots,
   **characterized in that**
   a configurable value for each of a hopping interval and a period length includes a configurable value for a parameter on periodicity in which a slot format is configured in a TDD transmission, the hopping interval being an interval at which the transmission is performed at the same frequency position, the period length being a length during which channel estimation is performed in the transmission period.

14. A communication method, comprising:

performing, by a communication apparatus (100), based on a transmission period configured for repetition transmission of a signal, control of frequency hopping in which transmission is performed at the same frequency position in the transmission period; and

receiving, by the communication apparatus, the signal in accordance with the control of the frequency hopping, wherein the transmission period includes a plurality of slots,

**characterized in that**

a configurable value for each of a hopping interval and a period length includes a configurable value for a parameter on periodicity in which a slot format is configured in a TDD transmission, the hopping interval being an interval at which the transmission is performed at the same frequency position, the period length being a length during which channel estimation is performed in the transmission period.

15. The communication apparatus according to claim 1, wherein the communication apparatus is implemented as an integrated circuit.

**Patentansprüche**

1. Kommunikationsvorrichtung (200), umfassend:

eine Steuerschaltung, die dazu konfiguriert ist, basierend auf einer für die Wiederholungsübertragung eines Signals festgelegten Übertragungsperiode eine Frequenzsprungsteuerung durchzuführen, bei der die Übertragung an derselben Frequenzposition in der Übertragungsperiode durchgeführt wird; und

eine Übertragungsschaltung, die dazu konfiguriert ist, das Signal in Übereinstimmung mit der Steuerung des Frequenzsprungs zu übertragen,

wobei die Übertragungsperiode eine Vielzahl von Schlitzen beinhaltet,

**dadurch gekennzeichnet, dass**

ein konfigurierbarer Wert für jedes aus einem Sprungintervall und einer Periodenlänge einen konfigurierbaren Wert für einen Periodizitätsparameter beinhaltet, anhand dessen ein Schlitzformat in einer TDD-Übertragung konfiguriert wird, wobei das Sprungintervall ein Intervall ist, in dem die Übertragung auf derselben Frequenzposition durchgeführt wird, und die Periodenlänge eine Länge ist, während der die Kanalschätzung in der Übertragungsperiode durchgeführt wird.

2. Kommunikationsvorrichtung nach Anspruch 1, wobei:

die Steuerschaltung ein Demodulationsreferenzsignal basierend auf einer Bündelperiode für das Demodulationsreferenzsignal generiert, und

die Übertragungsschaltung das Demodulationsreferenzsignal überträgt.

3. Kommunikationsvorrichtung nach Anspruch 2, wobei die Bündelperiode eine Periode zum Bündeln des Demodulationsreferenzsignals ist.

4. Kommunikationsvorrichtung nach Anspruch 2, wobei:

die Übertragungsperiode von einer Basisstation (100) durch einen Parameter einer höheren Ebene angegeben wird,

und ein möglicher Wert für das Sprungintervall ein Teilsatz eines möglichen Werts für die Bündelperiode ist.

5. Kommunikationsvorrichtung nach Anspruch 2, wobei in einem Fall, dass es sich bei dem Signal um einen gemeinsam genutzten physischen Uplink-Kanal, PUSCH, handelt, eine Frequenzposition, an der das Signal übertragen wird, basierend auf einer physischen Schlitznummer bestimmt wird, und in einem Fall, dass es sich bei dem Signal um einen physischen Uplink-Steuerkanal, PUCCH, handelt, eine Frequenzposition, an der das Signal übertragen wird, basierend auf einer relativen Schlitznummer bestimmt wird.

6. Kommunikationsvorrichtung nach Anspruch 2, wobei Informationen über die Bündelperiode von einer Basisstation (100) durch ein Signal einer höheren Ebene angegeben werden.

7. Kommunikationsvorrichtung nach Anspruch 2, wobei Informationen über die Bündelperiode basierend auf einer Fähigkeit der Kommunikationsvorrichtung bestimmt werden.

8. Kommunikationsvorrichtung nach Anspruch 1, wobei der konfigurierbare Wert für jedes von dem Sprungintervall und der Periodenlänge mindestens einen von 0,5 ms, 0,625 ms, 1 ms, 1,25 ms, 2 ms, 2,5 ms, 3 ms, 4 ms, 5 ms und/oder 10 ms beinhaltet.

9. Kommunikationsvorrichtung nach Anspruch 1, wobei die Steuerschaltung ein Sprungmuster in dem Frequenzsprung auf ein vorgeschriebenes Muster konfiguriert.

10. Kommunikationsvorrichtung nach Anspruch 9, wobei das vorgeschriebene Muster ein Sprungmuster ist, das basierend auf einer physischen Schlitznummer bestimmt wird.

11. Kommunikationsvorrichtung nach Anspruch 9, wobei in einem Fall, in dem der Frequenzsprung konfiguriert ist und eine Kanalschätzung angewendet wird, das vorgeschriebene Muster ein Sprungmuster ist, das basierend auf einer Schlitznummer bestimmt wird, die relativ zu der Übertragungsperiode ist, falls die Kanalschätzung unter Verwendung mindestens eines Schlitzes in der Übertragungsperiode angewendet wird.

12. Kommunikationsvorrichtung (100), umfassend:

   eine Steuerschaltung, die dazu konfiguriert ist, basierend auf einer für die Wiederholungsübertragung eines Signals festgelegten Übertragungsperiode eine Frequenzsprungsteuerung durchzuführen, bei der die Übertragung an derselben Frequenzposition in der Übertragungsperiode durchgeführt wird; und
   eine Empfangsschaltung, die dazu konfiguriert ist, das Signal in Übereinstimmung mit der Steuerung des Frequenzsprungs zu empfangen,
   wobei die Übertragungsperiode eine Vielzahl von Schlitzen beinhaltet,
   **dadurch gekennzeichnet, dass**
   ein konfigurierbarer Wert für jedes aus einem Sprungintervall und einer Periodenlänge einen konfigurierbaren Wert für einen Periodizitätsparameter beinhaltet, anhand dessen ein Schlitzformat in einer TDD-Übertragung konfiguriert wird, wobei das Sprungintervall ein Intervall ist, in dem die Übertragung auf derselben Frequenzposition durchgeführt wird, und die Periodenlänge eine Länge ist, während der die Kanalschätzung in der Übertragungsperiode durchgeführt wird.

13. Kommunikationsverfahren, umfassend:

   Durchführen, durch eine Kommunikationsvorrichtung (200), basierend auf einer für die Wiederholungsübertragung eines Signals festgelegten Übertragungsperiode, einer Frequenzsprungsteuerung, bei der die Übertragung an derselben Frequenzposition in der Übertragungsperiode durchgeführt wird; und
   Übertragen, durch die Kommunikationsvorrichtung, des Signals in Übereinstimmung mit der Steuerung des Frequenzsprungs,
   wobei die Übertragungsperiode eine Vielzahl von Schlitzen beinhaltet,
   **dadurch gekennzeichnet, dass**
   ein konfigurierbarer Wert für jedes aus einem Sprungintervall und einer Periodenlänge einen konfigurierbaren Wert für einen Periodizitätsparameter beinhaltet, anhand dessen ein Schlitzformat in einer TDD-Übertragung konfiguriert wird, wobei das Sprungintervall ein Intervall ist, in dem die Übertragung auf derselben Frequenzposition durchgeführt wird, und die Periodenlänge eine Länge ist, während der die Kanalschätzung in der Übertragungsperiode durchgeführt wird.

14. Kommunikationsverfahren, umfassend:

   Durchführen, durch eine Kommunikationsvorrichtung (100), basierend auf einer für die Wiederholungsübertragung eines Signals festgelegten Übertragungsperiode, einer Frequenzsprungsteuerung, bei der die Übertragung an derselben Frequenzposition in der Übertragungsperiode durchgeführt wird; und
   Empfangen, durch die Kommunikationsvorrichtung, des Signals in Übereinstimmung mit der Steuerung des Frequenzsprungs,
   wobei die Übertragungsperiode eine Vielzahl von Schlitzen beinhaltet,
   **dadurch gekennzeichnet, dass**
   ein konfigurierbarer Wert für jedes aus einem Sprungintervall und einer Periodenlänge einen konfigurierbaren Wert für einen Periodizitätsparameter beinhaltet, anhand dessen ein Schlitzformat in einer TDD-Übertragung konfiguriert wird, wobei das Sprungintervall ein Intervall ist, in dem die Übertragung auf derselben Frequenzposition durchgeführt wird, und die Periodenlänge eine Länge ist, während der die Kanalschätzung in der Übertragungsperiode durchgeführt wird.

15. Kommunikationsvorrichtung nach Anspruch 1, wobei die Kommunikationsvorrichtung als eine integrierte Schaltung implementiert ist.

**Revendications**

1. Appareil de communication (200), comprenant:

   un circuit de commande, qui est configuré pour effectuer, sur la base d'une période de transmission configurée pour la transmission répétitive d'un signal, une commande de saut de fréquence dans laquelle la transmission est effectuée à la même position de fréquence au cours de la période de transmission; et
   un circuit de transmission, qui est configuré pour transmettre le signal conformément à la commande du saut de fréquence,
   dans lequel la période de transmission comprend une pluralité de tranches,
   **caractérisé en ce que**
   une valeur configurable pour chacun d'un intervalle de saut et d'une durée de période comprend une valeur configurable pour un paramètre de périodicité dans lequel un format de créneau est configuré dans une transmission TDD, l'intervalle de saut étant un intervalle pendant lequel la transmission est effectuée à la même position de fréquence, la durée de période étant une durée pendant laquelle l'estimation de canal est effectuée au cours de la période de transmission.

2. Appareil de communication selon la revendication 1, dans lequel :

   le circuit de commande génère un signal de référence de démodulation, sur la base d'une période de regroupement pour le signal de référence de démodulation, et
   le circuit de transmission transmet le signal de référence de démodulation.

3. Appareil de communication selon la revendication 2, dans lequel la période de regroupement est une période de regroupement du signal de référence de démodulation.

4. Appareil de communication selon la revendication 2, dans lequel:

   la période de transmission est indiquée par une station de base (100) au moyen d'un paramètre de couche supérieure,
   et une valeur possible pour l'intervalle de saut est un sous-ensemble d'une valeur possible pour la période de regroupement.

5. Appareil de communication selon la revendication 2, dans lequel, au cas où le signal est un canal physique partagé de liaison montante (PUSCH), une position de fréquence à laquelle le signal est transmis est déterminée sur la base d'un numéro de tranche physique, et, au cas où le signal est un canal physique de contrôle de liaison montante (PUCCH), une position de fréquence à laquelle le signal est transmis est déterminée sur la base d'un numéro de tranche relative.

6. Appareil de communication selon la revendication 2, dans lequel des informations sur la période de regroupement sont indiquées depuis une station de base (100) par un signal de couche supérieure.

7. Appareil de communication selon la revendication 2, dans lequel les informations relatives à la période de regroupement sont déterminées en fonction d'une capacité de l'appareil de communication.

8. Appareil de communication selon la revendication 1, dans lequel la valeur configurable pour chacun de l'intervalle de saut et de la durée de la période comprend au moins l'une des valeurs suivantes : 0,5 ms, 0,625 ms, 1 ms, 1,25 ms, 2 ms, 2,5 ms, 3 ms, 4 ms, 5 ms et/ou 10 ms.

9. Appareil de communication selon la revendication 1, dans lequel le circuit de commande configure un motif de saut dans le saut de fréquence selon un motif prescrit.

10. Appareil de communication selon la revendication 9, dans lequel le modèle prescrit est un modèle de saut déterminé sur la base d'un numéro de tranche physique.

**11.** Appareil de communication selon la revendication 9, dans lequel, dans le cas où le saut de fréquence est configuré et où une estimation de canal est appliquée, le modèle prescrit est un modèle de saut déterminé sur la base d'un numéro de créneau relatif à la période de transmission, au cas où l'estimation de canal utilisant au moins un créneau dans la période de transmission est appliquée.

**12.** Appareil de communication (100), comprenant:

un circuit de commande, qui est configuré pour effectuer, sur la base d'une période de transmission configurée pour la transmission répétée d'un signal, une commande de saut de fréquence dans laquelle la transmission est effectuée à la même position de fréquence au cours de la période de transmission; et
un circuit de réception, qui est configuré pour recevoir le signal conformément à la commande du saut de fréquence,
dans lequel la période de transmission comprend une pluralité de créneaux,
**caractérisé en ce que**
une valeur configurable pour chacun d'un intervalle de saut et d'une durée de période comprend une valeur configurable pour un paramètre de périodicité dans lequel un format de tranche est configuré dans une transmission TDD, l'intervalle de saut étant un intervalle pendant lequel la transmission est effectuée à la même position de fréquence, la durée de période étant une durée pendant laquelle l'estimation de canal est effectuée au cours de la période de transmission.

**13.** Procédé de communication, comprenant:

la réalisation, par un appareil de communication (200), sur la base d'une période de transmission configurée pour la transmission répétitive d'un signal, d'une commande de saut de fréquence dans laquelle la transmission est effectuée à la même position de fréquence au cours de la période de transmission; et
la transmission, par l'appareil de communication, du signal conformément à la commande de saut de fréquence,
dans lequel la période de transmission comprend une pluralité de tranches,
**caractérisé en ce que**
une valeur configurable pour chacun d'un intervalle de saut et d'une durée de période comprend une valeur configurable pour un paramètre de périodicité selon lequel un format de créneau est configuré dans une transmission TDD, l'intervalle de saut étant un intervalle pendant lequel la transmission est effectuée à la même position de fréquence, la durée de période étant une durée pendant laquelle l'estimation de canal est effectuée dans la période de transmission.

**14.** Procédé de communication, comprenant:

la réalisation, par un appareil de communication (100), sur la base d'une période de transmission configurée pour la transmission répétitive d'un signal, d'une commande de saut de fréquence dans laquelle la transmission est effectuée à la même position de fréquence au cours de la période de transmission; et
la réception, par l'appareil de communication, du signal conformément à la commande du saut de fréquence,
dans lequel la période de transmission comprend une pluralité de créneaux,
**caractérisé en ce que**
une valeur configurable pour chacun d'un intervalle de saut et d'une durée de période comprend une valeur configurable pour un paramètre de périodicité selon lequel un format de créneau est configuré dans une transmission TDD, l'intervalle de saut étant un intervalle pendant lequel la transmission est effectuée à la même position de fréquence, la durée de période étant une durée pendant laquelle l'estimation de canal est effectuée dans la période de transmission.

**15.** Dispositif de communication selon la revendication 1, **caractérisé en ce que** ledit dispositif de communication est réalisé sous la forme d'un circuit intégré.

FIG. 1

FIG. 2

FIG. 3

| Slot index (physical) | #0 | #1 | #2 | #3 | #4 | #5 | #6 | #7 | #8 | #9 |
|---|---|---|---|---|---|---|---|---|---|---|

Slot index (relative)　　　#0　#1　#2　#3　#4　#5　#6　#7　#8

$RB_0$

Rep#0　　Rep#2　　Rep#4　　Rep#6

$RB_1$

Rep#1　　Rep#3　　Rep#5　　Rep#7

Freq.

PUCCH repetition

FIG. 4

FIG. 5

FIG. 6

100

FIG. 7

200

FIG. 8

FIG. 9

EP 4 456 641 B1

FIG. 10

Start

S101 Inter-slot Frequency Hopping
- Diasbled → No inter-slot frequency hopping (S102)
- Enabled → S103

S103 HoppingInterval is configured?
- Yes → Hopping pattern based on physical slot index (S104)
- No → S105

S105 DMRS bundling is enabled?
- Yes → Hopping pattern based on relative slot index (S106)
- No → Default hopping pattern (Same as Rel.15/16) (S107)

End

FIG. 11

FIG. 12

FIG. 13

```
                        ┌──────────────┐
                        │    Start     │
                        └──────┬───────┘
                               │
                               ▼  S101
                        ╱─────────────╲          Diasbled
                       ╱   Inter-slot   ╲──────────────────────────────────────────┐
                       ╲ Frequency Hopping ╱                                        │
                        ╲─────────────╱                                             │
                           │ Enabled                                                │
                           ▼  S201                                                  │
          Yes      ╱─────────────╲                                                  │
       ┌──────────╱ DMRS bundling  ╲                                                │
       │          ╲   is enabled    ╱                                               │
       │           ╲─────────────╱                                                  │
       │              │ No                                                          │
       │              ▼  S202                                                       │
       │        ╱─────────────╲        No                                           │
       │       ╱ HoppingInterval ╲──────────────────┐                              │
       │       ╲  is configured   ╱                  │                              │
       │        ╲─────────────╱                      │                              │
       │           │ Yes                             │                              │
       ▼  S106     ▼  S104              S107         ▼            S102              ▼
┌───────────────┐ ┌───────────────┐  ┌──────────────────────┐ ┌─────────────────────────────┐
│Hopping pattern│ │Hopping pattern│  │ Default hopping pattern│ │No inter-slot frequency hopping│
│   based on    │ │   based on    │  │  (Same as Rel.15/16)  │ │                             │
│relative slot  │ │ physical slot │  │                      │ │                             │
│    index      │ │    index      │  │                      │ │                             │
└───────┬───────┘ └───────┬───────┘  └──────────┬───────────┘ └──────────────┬──────────────┘
        │                 │                     │                            │
        └─────────────────┼─────────────────────┴────────────────────────────┘
                          ▼
                   ┌──────────────┐
                   │     End      │
                   └──────────────┘
```

FIG. 14

| Slot index | #0 (DL) | #1 (DL) | #2 (UL) | #3 (UL) | #4 (UL) | #5 (DL) | #6 (DL) | #7 (UL) | #8 (UL) | #9 (UL) | #10 (DL) | #11 (DL) | #12 (UL) | #13 (UL) | #13 (UL) |

5ms          5ms          5ms

FIG. 15

FIG. 16

FIG. 17

FIG. 18

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

5 GC

SMF

UE IP address
allocation

PDU Session
Control

internet

FIG. 19

FIG. 20

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 21

FIG. 22

# EP 4 456 641 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 4319367 A1

- EP 4207919 A1

### Non-patent literature cited in the description

- **CHINA TELECOM**. FL Summary#2 of joint channel estimation for PUSCH. *3GPP DRAFT; R1-2112561*
- NR Base Station (BS) radio transmission and reception (Release 15). *3GPP TS38.104 V15.15.0*, September 2021
- **CHINA TELECOM**. New WID on NR coverage enhancements. *3GPP TSG RAN Meeting #90e, RP-202928*, December 2020
- NR Physical channels and modulation (Release 16). *3GPP TS38.211 V16.7.0*, September 2021
- NR Multiplexing and channel coding (Release 16). *3GPP TS38.212 V16.7.0*, September 2021

- NR Physical layer procedures for control (Release 16). *3GPP TS38.213 V16.7.0*, September 2021
- NR Physical layer procedures for data (Release 16). *3GPP TS38.214 V16.7.0*, September 2021
- NR Radio Resource Control (RRC) protocol specification (Release 16). *3GPP TS38.331 V16.6.0*, September 2021
- **CHINA TELECOM**. 107-e-NR-R17-CovEnh-03] Summary of email discussion on joint channel estimation for PUSCH. *3GPP TSG RAN WG1 #107-e, R1-2112828*, November 2021